# EUROPEAN PATENT APPLICATION

(11) **EP 4 398 682 A1**
(43) Date of publication of application: **10.07.2024**
(21) Application number: 22864697.2
(22) Date of filing: 01.09.2022
(51) Int. Cl.: H05B 6/10, H05B 6/36

(54) **TRANSVERSE-TYPE INDUCTION HEATING DEVICE**

(30) Priority: 01.09.2021 JP 2021142296
(71) Applicant: NIPPON STEEL CORPORATION, Chiyoda-ku Tokyo 100-8071 (JP)
(72) Inventor: UMETSU, Kenji, Tokyo 100-8071 (JP); UEKI, Tsutomu, Tokyo 100-8071 (JP)
(74) Representative: Vossius & Partner Patentanwälte Rechtsanwälte mbB
(86) International application number: PCT/JP2022/032996
(87) International publication number: WO 2023/033115

(57) **Abstract**

Coils (220, 320) are respectively arranged on a front side and a rear side of a planned conveyance plane (CP). Non-edge cores (211, 311) and edge cores (212-213, 312-313) are arranged with respect to the coils (220, 320). The non-edge cores (211, 311) are so-called T-shaped cores, and arranged at center regions in an x-axis direction. Two edge cores (212-213, 312-313) are so-called E-shaped cores, and arranged on both sides in the x-axis direction of the non-edge cores (211, 311), respectively. An interval between upstream-side leg portions (2122, 3122) and downstream-side leg portions (2123, 3123) provided to the edge cores (212, 313) and the planned conveyance plane (CP), is shorter than an interval between parts of the non-edge cores (211, 311) except for center leg portions (2111, 3111) thereof and the planned conveyance plane (CP).

## Description

### TECHNICAL FIELD

The present invention relates to a transverse flux induction heating device, and is particularly suitable for heating inductively a conductor sheet as a heating target, by intersecting of alternating magnetic fields with a sheet surface of the conductor sheet. This application is based upon and claims the benefit of priority of the prior Japanese Patent Application No. 2021-142296, filed on September 1, 2021, the entire contents of which are incorporated herein by reference.

### BACKGROUND ART

An induction heating device is used to continuously heat a conductor sheet such as a band-shaped steel sheet. The induction heating device imposes an alternating magnetic field generated from a coil on a conductor sheet. Accordingly, an eddy current is induced in the conductor sheet by electromagnetic induction. The conductor sheet is heated by Joule heat based on the eddy current. As an induction heating device, there is a solenoid-type induction heating device. The solenoid-type induction heating device imposes an alternating magnetic field substantially parallel to a longitudinal direction of a conductor sheet disposed inside a solenoid coil. When a thickness of a conductor sheet as a heating target is small (when the thickness of the conductor sheet is 1 mm or less, for example), with the solenoid-type induction heating device, it may not be able to heat the conductor sheet to a desired temperature even if a frequency of the alternating magnetic field is increased.

As an induction heating device capable of easily performing induction heating on a thin conductor sheet, there is a transverse flux induction heating device. The transverse flux induction heating device includes, for example, a pair of coils arranged on a front side and a rear side of a planned conveyance plane of a conductor sheet to be conveyed in a horizontal direction. The coils forming the pair of coils are arranged to make alternating magnetic fields generated through energization of alternating currents in mutually the same direction intersect the planned conveyance plane of the conductor sheet. With a general transverse flux induction heating device, an eddy current concentrates at an end portion in a width direction of a conductor sheet. For this reason, a current density at the end portion in the width direction of the conductor sheet increases. Accordingly, the end portion in the width direction of the conductor sheet may be overheated. Note that the width direction is a direction perpendicular to a conveyance direction of the conductor sheet and a facing direction of the coils. In the following explanation, the end portion in the width direction of the conductor sheet will be referred to as an edge portion according to need.

Regarding such problems, Patent Literature 1 discloses that a shield plate (blocking plate) capable of moving along a width direction is arranged between an edge portion of a conductor sheet and a magnetic pole. The shield plate is made of a non-magnetic metal material. In such a technique, an alternating magnetic field generated from a coil is blocked by the shield plate, to thereby suppress a temperature distribution in the width direction of the conductor from being nonuniform.

Further, Patent Literature 2 discloses that a secondary coil for generating a magnetic field that cancels an alternating magnetic field generated from a coil for heating a conductor sheet, is arranged between an edge portion of the conductor sheet and a magnetic pole. In the technique described in Patent Literature 2, by making the secondary coil generate the magnetic field that cancels the alternating magnetic field generated from the coil, a temperature distribution in a width direction of the conductor is suppressed from being nonuniform.

Further, Patent Literature 3 discloses that bulging portions are formed on an original core. The bulging portions are arranged at positions facing regions where a temperature is lowered at both end portions in a width direction, of a region of a conductor sheet. In the technique described in Patent Literature 3, the bulging portions formed on the original core suppress a temperature distribution in the width direction of the conductor from being nonuniform.

Further, Patent Literature 4 discloses a technique in which a first J-shaped conductor 32 and a second J-shaped conductor 34 are used to form a coil. In the technique described in Patent Literature 4, by gliding the first J-shaped conductor 32 along a width direction relative to the second J-shaped conductor 34, a length in the width direction of a region between the first J-shaped conductor 32 and the second J-shaped conductor 34 is changed. In the technique described in Patent Literature 4, by changing the length in the width direction of the region between the first J-shaped conductor 32 and the second J-shaped conductor 34 in accordance with a width of the conductor, a temperature distribution in the width direction of the conductor is suppressed from being nonuniform.

Further, Patent literature 5 discloses a technique in which a plurality of magnetic pole segments are arranged in a width direction. In such a technique, a distance between the plurality of magnetic pole segments and a conductor is changed in accordance with a width of the conductor, to thereby suppress a temperature distribution in the width direction of the conductor from being nonuniform. Further, Patent Literature 5 discloses a technique in which a plurality of bar-shaped magnetic poles wound with coils are arranged with an interval therebetween along a conveyance direction of the conductor. In such a technique, each of the plurality of bar-shaped magnetic poles rotates around a shaft, as a rotary shaft, that passes through a position of the gravity center of the magnetic pole and extends in a direction perpendicular to the conductor. In the technique, by rotating the plurality of bar-shaped magnetic poles in accordance with the width of the conductor, the temperature distribution in the width direction of the conductor is suppressed from being nonuniform. Further, Patent Literature 5 discloses that a plurality of iron cores are arranged in the conveyance direction of the conductor, and a current that flows through the coil wound around the iron core is switched. In such a technique, the current that flows through the coil wound around the iron core is switched in accordance with the width of the conductor, thereby switching the iron core that generates a magnetic flux. In the technique, the above enables to suppress the temperature distribution in the width direction of the conductor from being nonuniform.

Further, Patent Literature 6 discloses a technique in which a plurality of magnetic bars arranged in a width direction of a conductor are made as a core. In the technique described in Patent Literature 6, intervals between the plurality of magnetic bars are adjusted in accordance with a width of the conductor, and a shield plate is used, to thereby suppress a temperature distribution in the width direction of the conductor from being nonuniform.

However, in the techniques described in Patent Literatures 1 to 3, 5 to 6, the plurality of magnetic poles are arranged with an interval therebetween in the longitudinal direction of the conductor (conveyance direction). Therefore, in the techniques described in Patent Literatures 1 to 3, 5 to 6, there also exist alternating magnetic fields that are not directed to the conductor but directed to the other plurality of magnetic poles from the respective magnetic poles. Accordingly, it may not be able to apply the alternating magnetic fields with a desired magnitude to the band-shaped conductor. This may reduce a heating efficiency of the conductor. Further, in the technique described in Patent Literature 4, the core has no leg portions (teeth). Therefore, also in the technique described in Patent Literature 4, it may not be able to apply the alternating magnetic fields with a desired magnitude to the band-shaped conductor. Accordingly, a heating efficiency of the band-shaped conductor reduces.

On the other hand, Patent Literature 7 discloses a technique in which a tip portion of a leg portion (teeth) of a so-called T-shaped core is formed to a pointed wedge shape. In the technique described in Patent Literature 7, the shape of the core is formed in the T-shape, to thereby concentrate a density of magnetic lines of force that are made to intersect the conductor.

### CITATION LIST

### PATENT LITERATURE

Patent Literature 1: Japanese Examined Patent Application Publication No. 63-27836
Patent Literature 2: Japanese Laid-open Patent Publication No. 2007-122924
Patent Literature 3: Japanese Laid-open Patent Publication No. 2010-108605
Patent Literature 4: Description of U.S. Patent No. 5739506
Patent Literature 5: Japanese Laid-open Patent Publication No. 03-291891
Patent Literature 6: Description of U.S. Patent No. 6498328
Patent Literature 7: Japanese Laid-open Patent Publication No. 2004-228068

### SUMMARY OF INVENTION

### TECHNICAL PROBLEM

However, in the technique described in Patent Literature 7, the number of the magnetic pole (core leg portion) is one. Therefore, when there is an alternating magnetic field that does not reach the conductor, the alternating magnetic field may not return to the magnetic pole to be diffused to the periphery. Accordingly, there is a possibility that a peripheral object (an electronic device, for example) is heated by the alternating magnetic field diffused from the core. In this case, a conductor irrelevant to the conductor as a heating target and a magnetic substance may be heated. Further, there is a possibility that a noise is generated in the peripheral object due to the alternating magnetic field diffused from the core. Further, there is a possibility that the conductor sheet is heated unintentionally by the alternating magnetic field diffused from the core. In this case, a temperature distribution in a width direction of the conductor sheet may be nonuniform.

Further, if, in the technique described in Patent Literature 7, a shield member is arranged between an edge portion of the conductor sheet and the magnetic pole, for example, the alternating magnetic field from the magnetic pole is likely to be diffused to the periphery as a noise. For example, when a shield plate is used as a shield member as described in Patent Literatures 1, 6, a large eddy current is generated in the shield plate due to the alternating magnetic field from the magnetic pole. Therefore, the alternating magnetic field from the magnetic pole is likely to be reflected by the magnetic field of the eddy current generated in the shield plate. When the alternating magnetic field reflected by the shield plate as above does not return to the magnetic pole, the alternating magnetic field originates not only a main cause of heating of a peripheral object but also a main cause of generation of noise in the peripheral object. Further, when the secondary coil is used as a shield member as described in Patent Literature 2, there may be generated an alternating magnetic field from the magnetic pole that is not cancelled by the magnetic field generated from the secondary coil and does not return to the magnetic pole. Such an alternating magnetic field originates not only a main cause of heating of a peripheral object but also a main cause of generation of noise in the peripheral object. Further, the alternating magnetic field diffused as described above may change a distribution of the alternating magnetic field to be applied to the conductor sheet, with respect to an original distribution of alternating magnetic field determined according to the arrangement of magnetic pole. In this case, the conductor sheet may be heated unintentionally. By the unintentional heating as above, the temperature distribution in the width direction of the conductor sheet may be nonuniform. Conditions regarding a place in which the transverse flux induction heating device is installed are not the same. Therefore, it is substantially impossible to predict whether or not the conductor sheet is heated unintentionally. If total power of the transverse flux induction heating device is increased due to the unintentional heating of the conductor sheet, a reduction in total heating efficiency of the transverse flux induction heating device may be caused. In this case, it may be required to reconsider the method of power supply with respect to the transverse flux induction heating device for heating the conductor sheet to a desired temperature.

Note that the diffusion of alternating magnetic field may occur even in a case where a core with no leg portion (teeth) is used as described in Patent Literature 4, and a case where a plurality of cores are used as described in Patent Literatures 5, 6.

As described above, in the conventional techniques, there is a problem that it is impossible to materialize an induction heating device that aims to attain both the suppression of the reduction in magnitude of the alternating magnetic field applied to the band-shaped conductor and the suppression of the diffusion of the alternating magnetic field.

The present invention has been made in view of the problems as described above, and an object thereof is to materialize an induction heating device that aims to attain both suppression of a reduction in magnitude of an alternating magnetic field applied to a band-shaped conductor and suppression of diffusion of the alternating magnetic field.

### SOLUTION TO PROBLEM

A first example of a transverse flux induction heating device of the present invention is characterized in that it is a transverse flux induction heating device including: a pair of coils having at least one coil arranged on a front side and at least one coil arranged on a rear side of a planned conveyance plane of a conductor sheet to make alternating magnetic fields generated through energization of alternating currents in mutually the same direction intersect the planned conveyance plane of the conductor sheet; and cores arranged by a set for each coil forming the pair of coils, in which the set of cores arranged for each coil has a non-edge core arranged at a position including a center in a width direction, and edge cores arranged on both sides of the non-edge core in the width direction, the width direction is a direction perpendicular to a conveyance direction of the conductor sheet and a facing direction of the coils, the non-edge core has a body portion and a center leg portion, each of the edge cores arranged on both sides of the non-edge core in the width direction has a body portion, a center leg portion, an upstream-side leg portion, and a downstream-side leg portion, the body portion is extended in the conveyance direction from a region on an upstream side in the conveyance direction of the coil to a region on a downstream side in the conveyance direction of the coil, on a back side of the coil, the back side is a opposite side of a side where the planned conveyance plane exists, the center leg portion is extended in a direction of the planned conveyance plane from the body portion to pass through a hollow portion of the coil, the upstream-side leg portion is extended in a direction of the planned conveyance plane from the body portion, on the upstream side of the coil, the downstream-side leg portion is extended in a direction of the planned conveyance plane from the body portion, on the downstream side of the coil, and an interval between the upstream-side leg portion and the downstream-side leg portion provided to the edge core and the planned conveyance plane, is shorter than an interval between a part of the non-edge core except for the center leg portion thereof and the planned conveyance plane.

A second example of the transverse flux induction heating device of the present invention is characterized in that an interval between the center leg portion provided to the non-edge core and the planned conveyance plane, is shorter than the interval between the part of the non-edge core except for the center leg portion thereof and the planned conveyance plane.

A third example of the transverse flux induction heating device of the present invention is characterized in that the non-edge core does not have the upstream-side leg portion and the downstream-side leg portion.

A fourth example of the transverse flux induction heating device of the present invention is characterized in that the non-edge core has the upstream-side leg portion and the downstream-side leg portion.

A fifth example of the transverse flux induction heating device of the present invention is characterized in that an interval between the center leg portion provided to the edge core and the planned conveyance plane, and the interval between the upstream-side leg portion and the downstream-side leg portion provided to the edge core and the planned conveyance plane, are the same.

A sixth example of the transverse flux induction heating device of the present invention is characterized in that the interval between the center leg portion provided to the edge core and the planned conveyance plane, and the interval between the center leg portion provided to the non-edge core and the planned conveyance plane, are the same.

A seventh example of the transverse flux induction heating device of the present invention is characterized in that in the set of cores, the non-edge core and the edge cores arranged on both sides of the non-edge core are an integrated core.

### BRIEF DESCRIPTION OF DRAWINGS

[Fig. 1] Fig. 1 is a view illustrating a first embodiment of the present invention, and illustrating one example of an external configuration of an induction heating device.
[Fig. 2] Fig. 2 is a view illustrating the first embodiment of the present invention, and illustrating one example of a first cross section of the induction heating device.
[Fig. 3] Fig. 3 is a view illustrating the first embodiment of the present invention, and illustrating one example of a second cross section of the induction heating device.
[Fig. 4] Fig. 4 is a view illustrating the first embodiment of the present invention, and illustrating one example of a third cross section of the induction heating device.
[Fig. 5] Fig. 5 is a view illustrating the first embodiment of the present invention, and illustrating one example of a fourth cross section of the induction heating device.
[Fig. 6] Fig. 6 is a view illustrating a modified example of the first embodiment of the present invention, and illustrating a first cross section of the induction heating device.
[Fig. 7] Fig. 7 is a view illustrating a second embodiment of the present invention, and illustrating one example of an external configuration of an induction heating device.
[Fig. 8] Fig. 8 is a view illustrating the second embodiment of the present invention, and illustrating one example of a first cross section of the induction heating device.
[Fig. 9] Fig. 9 is a view illustrating the second embodiment of the present invention, and illustrating one example of a second cross section of the induction heating device.
[Fig. 10] Fig. 10 is a view illustrating the second embodiment of the present invention, and illustrating one example of a third cross section of the induction heating device.
[Fig. 11] Fig. 11 is a view illustrating the second embodiment of the present invention, and illustrating one example of a fourth cross section of the induction heating device.
[Fig. 12] Fig. 12 is a view illustrating a first modified example of the second embodiment of the present invention, and illustrating a first cross section of the induction heating device.
[Fig. 13] Fig. 13 is a view illustrating a second modified example of the second embodiment of the present invention, and illustrating an external configuration of the induction heating device.
[Fig. 14] Fig. 14 is a view illustrating the second modified example of the second embodiment of the present invention, and illustrating a first cross section of the induction heating device.
[Fig. 15] Fig. 15 is a view illustrating the second modified example of the second embodiment of the present invention, and illustrating a second cross section of the induction heating device.
[Fig. 16] Fig. 16 is a view illustrating the second modified example of the second embodiment of the present invention, and illustrating a third cross section of the induction heating device.
[Fig. 17] Fig. 17 is a view illustrating the second modified example of the second embodiment of the present invention, and illustrating a fourth cross section of the induction heating device.
[Fig. 18] Fig. 18 is a view illustrating a third embodiment of the present invention, and illustrating one example of an external configuration of an induction heating device.
[Fig. 19] Fig. 19 is a view illustrating the third embodiment of the present invention, and illustrating one example of a first cross section of the induction heating device.
[Fig. 20] Fig. 20 is a view illustrating the third embodiment of the present invention, and illustrating one example of a second cross section of the induction heating device.
[Fig. 21] Fig. 21 is a view illustrating the third embodiment of the present invention, and illustrating one example of a third cross section of the induction heating device.
[Fig. 22] Fig. 22 is a view illustrating the third embodiment of the present invention, and illustrating one example of a fourth cross section of the induction heating device.
[Fig. 23] Fig. 23 is a view illustrating the third embodiment of the present invention, and illustrating one example of a fifth cross section of the induction heating device.
[Fig. 24] Fig. 24 is a view illustrating the third embodiment of the present invention, and illustrating one example of a sixth cross section of the induction heating device.
[Fig. 25] Fig. 25 is a view illustrating the third embodiment of the present invention, and illustrating one example of a seventh cross section of the induction heating device.
[Fig. 26] Fig. 26 is a view illustrating a first modified example of the third embodiment of the present invention, and illustrating a first cross section of the induction heating device.
[Fig. 27] Fig. 27 is a view illustrating a second modified example of the third embodiment of the present invention, and illustrating a first cross section of the induction heating device.
[Fig. 28] Fig. 28 is a view illustrating a fourth embodiment of the present invention, and illustrating one example of a first cross section of the induction heating device.
[Fig. 29] Fig. 29 is a view illustrating the fourth embodiment of the present invention, and illustrating one example of a second cross section of the induction heating device.

### DESCRIPTION OF EMBODIMENTS

Hereinafter, embodiments of the present invention will be explained while referring to the drawings. Note that the same thing in the following explanation includes not only a thing that is strictly the same but also a thing differed within a range that does not depart from the gist of the invention. In like manner, the matched thing in the following explanation includes not only a thing that is strictly matched but also a thing that does not match within a range that does not depart from the gist of the invention. For example, the same thing in the following explanation also includes a thing differed within a tolerance range defined when designing (within ±5%, for example). Further, in the explanation below, a transverse flux induction heating device will be referred to as an induction heating device according to need. Further, in the explanation below, a case where a conductor sheet as a heating target is a band-shaped steel sheet, is exemplified (note that the conductor sheet being the heating target is unlimited to the band-shaped steel sheet). Further, for the convenience of notation and explanation, a part of configuration will be omitted or illustrated in a simplified manner in each drawing. Further, in each drawing, x-y-z coordinates indicate a relation of directions in the drawing. A symbol of white circle (o) with black circle (•) given therein indicates a direction from a far side toward a near side of the paper sheet.

### (First embodiment)

First, a first embodiment of the present invention will be explained.

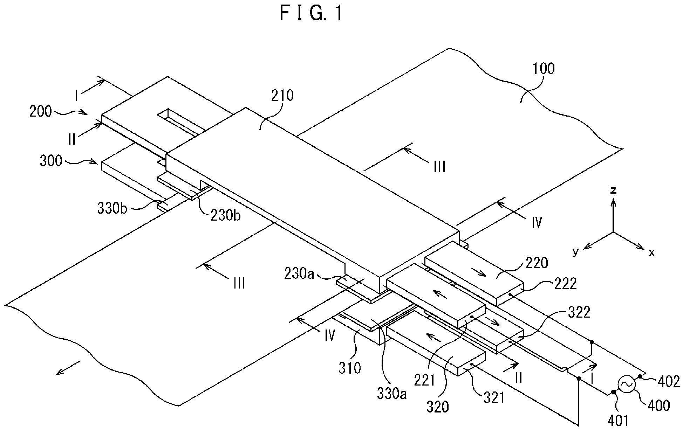

Fig. 1 is a view illustrating one example of an external configuration of an induction heating device. Concretely, Fig. 1 is a view in which the induction heating device is seen from diagonally above. Fig. 1 exemplifies a case where a band-shaped steel sheet 100 is conveyed in a direction of arrow mark illustrated at a tip of the band-shaped steel sheet 100 (y-axis positive direction). Specifically, Fig. 1 exemplifies a case where a conveyance direction of the band-shaped steel sheet 100 is the y-axis positive direction. Further, Fig. 1 exemplifies a case where a longitudinal direction of the band-shaped steel sheet 100 is a y-axis direction, a width direction of the band-shaped steel sheet 100 is an x-axis direction, and a thickness direction of the band-shaped steel sheet 100 is a z-axis direction. Note that a thickness of the band-shaped steel sheet 100 is unlimited. However, the induction heating device of each embodiment can heat a conductor sheet with a small thickness. Therefore, the thickness of the band-shaped steel sheet 100 as a heating target of the induction heating device of each embodiment is preferably 1 mm or less, for example. However, the thickness of the band-shaped steel sheet 100 being the heating target of the induction heating device of each embodiment may exceed 1 mm.

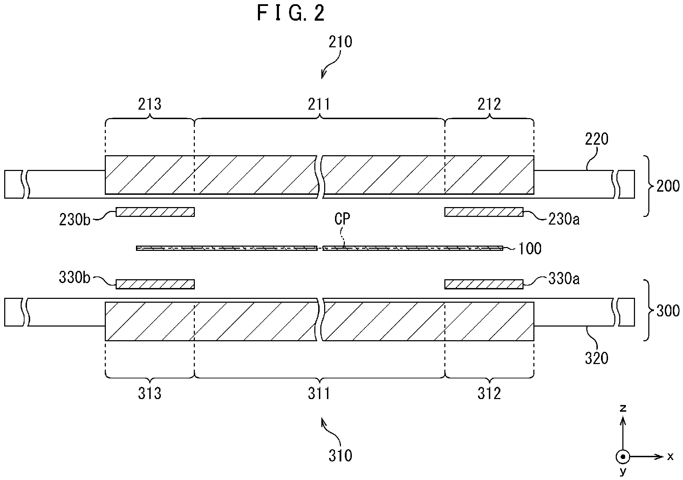

The induction heating device illustrated in Fig. 1 includes an upper inductor 200 and a lower inductor 300. The upper inductor 200 and the lower inductor 300 are arranged at positions facing each other with the band-shaped steel sheet 100 interposed therebetween (refer to Fig. 2 to Fig. 5). The upper inductor 200 and the lower inductor 300 have the same configuration. Therefore, the upper inductor 200 will be explained here in detail, and a detailed explanation regarding the lower inductor 300 will be omitted according to need. The band-shaped steel sheet 100 sometimes moves in the z-axis direction and the x-axis direction, and there is a case where the band-shaped steel sheet 100 is at a position slightly displaced from a center of the induction heating device. Even if there is such a movement of the position (meandering or the like, for example) of the band-shaped steel sheet 100, it is often the case where the band-shaped steel sheet 100 is controlled to be positioned at the center of the induction heating device as much as possible, by a publicly-known technique (for example, International Publication Pamphlet No. WO2019/181653). In principle, in the drawings below including Fig. 1, a state of a case where the band-shaped steel sheet 100 is at an ideal position (for example, the center position of the induction heating device) where a heating amount on an upper surface side and a lower surface side of the band-shaped steel sheet 100 and a heating amount on a left side and a right side in the conveyance direction of the band-shaped steel sheet 100 are equal, respectively, is illustrated. In the explanation below, a plane passing through a center position in the thickness direction of the band-shaped steel sheet 100 and perpendicular to the thickness direction of the band-shaped steel sheet 100 when the band-shaped steel sheet 100 is at the above-described ideal position, will be referred to as a planned conveyance plane CP according to need. Note that the plane passing through the center position in the thickness direction of the band-shaped steel sheet 100 and perpendicular to the thickness direction of the band-shaped steel sheet 100, is also a plane passing through the center position in the thickness direction of the band-shaped steel sheet 100 and parallel to a sheet surface of the band-shaped steel sheet 100. The planned conveyance plane CP is already decided at a time of designing the induction heating device, so that the induction heating device itself includes the planned conveyance plane CP. The planned conveyance plane CP is often positioned at the center of the induction heating device. Accordingly, a plane at a center of an interval between the upper inductor 200 and the lower inductor 300 may also be set to the planned conveyance plane CP. Further, in the explanation below, the conveyance direction of the band-shaped steel sheet 100 will be referred to as a conveyance direction according to need. Further, in the explanation below, a direction in which the upper inductor 200 and the lower inductor 300 face each other will be referred to as a facing direction of the coils or simply referred to as a facing direction according to need. Fig. 1 exemplifies a case where a front side of the planned conveyance plane CP is a z-axis positive direction side, and a rear side of the planned conveyance plane CP is a z-axis negative direction side. Further, Fig. 1 exemplifies a case where the upper inductor 200 is arranged on the front side of the planned conveyance plane CP, and the lower inductor 300 is arranged on the rear side of the planned conveyance plane CP.

As described above, Fig. 1 exemplifies a case where the facing direction of the coils is the z-axis direction, and the conveyance direction of the band-shaped steel sheet 100 is the y-axis positive direction. Therefore, Fig. 1 exemplifies a case where the width direction being the direction perpendicular to the facing direction of the coils and the conveyance direction of the band-shaped steel sheet 100 is the x-axis direction.

Note that an interval (distance in the z-axis direction) between the upper inductor 200 and the planned conveyance plane CP, and an interval between the lower inductor 300 and the planned conveyance plane CP normally are equal, but they may be different from each other. The present embodiment exemplifies a case where the induction heating device has a shape in a relation of mirror symmetry in which a y-z plane at a center in the x-axis direction of the induction heating device is set to a plane of symmetry. When the interval between the upper inductor 200 and the planned conveyance plane CP, and the interval between the lower inductor 300 and the planned conveyance plane CP are the same, the induction heating device has a shape in a relation of mirror symmetry in which the planned conveyance plane CP is set to a plane of symmetry. Note that the y-z plane is a virtual plane parallel to the y-axis and the z-axis.

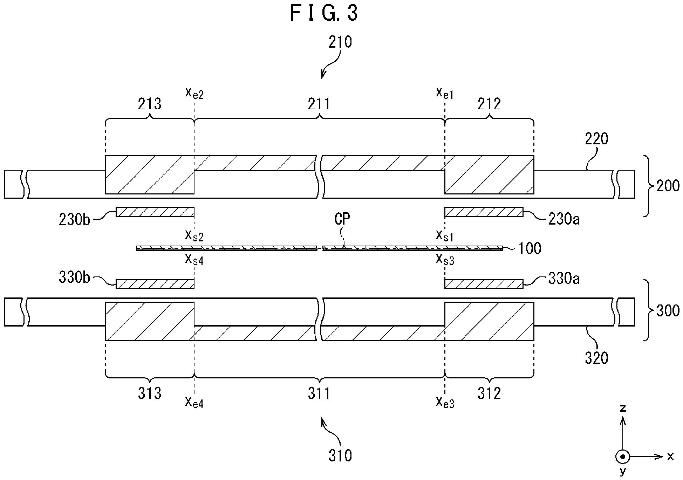

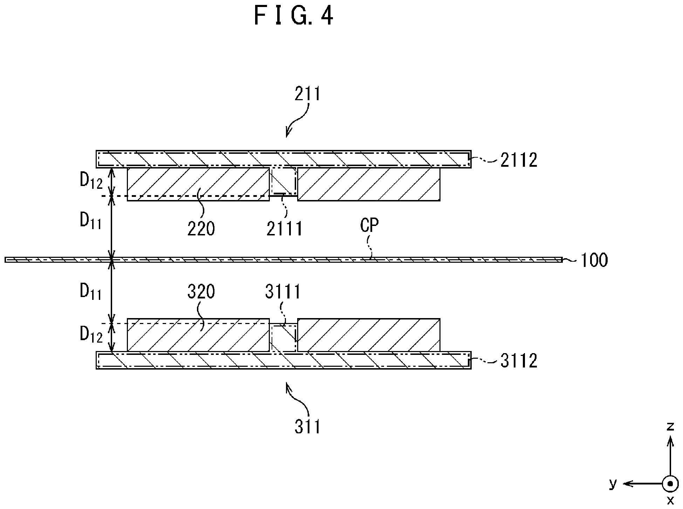

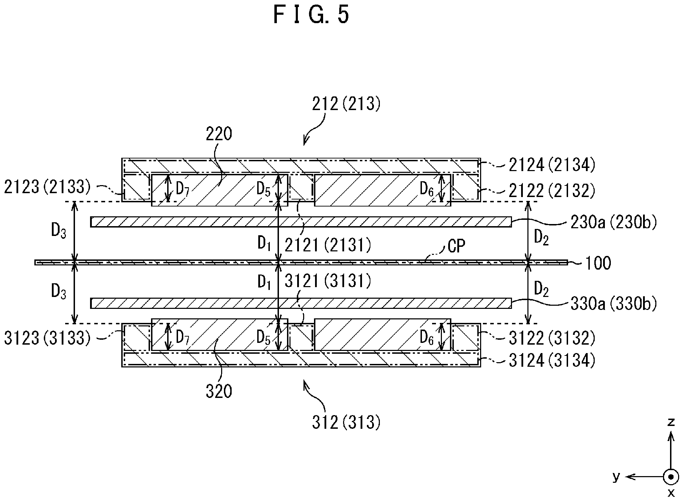

Fig. 2 is a view illustrating one example of a first cross section of the induction heating device. Concretely, Fig. 2 is a sectional view taken along I-I in Fig. 1. Fig. 3 is a view illustrating one example of a second cross section of the induction heating device. Concretely, Fig. 3 is a sectional view taken along II-II in Fig. 1. Fig. 4 is a view illustrating one example of a third cross section of the induction heating device. Concretely, Fig. 4 is a sectional view taken along III-III in Fig. 1. Fig. 5 is a view illustrating one example of a fourth cross section of the induction heating device. Concretely, Fig. 5 is a sectional view taken along IV-IV in Fig. 1.

In Fig. 2, the upper inductor 200 includes an upper core 210, a coil 220, and shield plates 230a, 230b. In the explanation below, a width direction of the induction heating device and the band-shaped steel sheet 100 will be referred to as an x-axis direction according to need. Further, in the explanation below, a direction parallel to the conveyance direction of the band-shaped steel sheet 100 (a longitudinal direction of the band-shaped steel sheet 100) will be referred to as a y-axis direction according to need. Further, an explanation will be made hereinbelow while referring a facing direction of the upper inductor 200 and the lower inductor 300 (a thickness direction of the band-shaped steel sheet 100) to as a z-axis direction according to need.

The coil 220 is a conductor having a circumferential portion. Note that Fig. 1 exemplifies a case where a portion with a thickness (a portion except for a straight line extended from an alternating-current power supply 400) corresponds to the circumferential portion of the coil 220. The circumferential portion of the coil 220 is arranged around the upper core 210 in a racetrack form by passing through a slot of the upper core 210, in the x-y plane. In the present embodiment, the coils 220, 320 are arranged to face each other with the planned conveyance plane CP interposed therebetween. Note that a direction in which the coil 220 arranged on the front side of the planned conveyance plane CP out of coils forming a pair of coils, and the coil 320 arranged on the rear side of the planned conveyance plane CP out of the coils forming the pair of coils face each other, is the above-described facing direction of the coils. Further, the x-y plane is a virtual plane parallel to the x-axis and the y-axis. The coil 220 is preferably arranged so that a direction perpendicular to the planned conveyance plane CP and a direction of axial center of the coil 220 are parallel to each other. The axial center of the coil 220 is an axis around which the coil 220 is arranged. In the example illustrated in Fig. 1, the axial center of the coil 220 is parallel to the z-axis.

Note that the coil 220 may have an insulator arranged around the conductor. Further, a case where the number of turns of the coil 220 is one is exemplified here. However, the number of turns of the coil 220 may be two or more. The number of turns of the coil 220 and that of the coil 320 are preferably the same.

Further, in Fig. 2 to Fig. 5, a case is exemplified in which an end portion on the planned conveyance plane CP side of the coil 220 (an end portion in the z-axis direction of the coil 220 closest to the planned conveyance plane CP side) is positioned on the planned conveyance plane CP side relative to an end portion on the planned conveyance plane CP side of the upper core 210 (an end portion in the z-axis direction of the upper core 210 closest to the planned conveyance plane CP side). However, the position in the z-axis direction of the end portion on the planned conveyance plane CP side of the coil 220 and the position in the z-axis direction of the end portion on the planned conveyance plane CP side of the upper core 210 may be the same, for example.

The upper core 210 is formed by using a ferromagnet. As illustrated in Fig. 2 and Fig. 3, the upper core 210 has a non-edge core 211, and two edge cores 212 to 213.

The edge cores 212 to 213 are arranged on both sides of the non-edge core 211 in the x-axis direction (on the x-axis positive direction side and the x-axis negative direction side). The present embodiment exemplifies a case where a position in the x-axis direction of the non-edge core 211 includes a center position in the x-axis direction of the upper core 210.

Further, the present embodiment exemplifies a case where the non-edge core 211 and the two edge cores 212 to 213 are integrated. Therefore, there are no boundary lines between the non-edge core 211, and the edge cores 212 to 213.

Further, the present embodiment exemplifies a case where the non-edge core 211 is formed by a plurality of electromagnetic steel sheets laminated in the x-axis direction, each having the same thickness and the same planar shape. In like manner, the present embodiment exemplifies a case where the edge cores 212 to 213 are formed by a plurality of electromagnetic steel sheets laminated in the x-axis direction, each having the same thickness and the same planar shape. Further, the present embodiment exemplifies a case where the thickness, the planar shape, and the number of laminating of the electromagnetic steel sheets forming the edge cores 212 to 213 are the same. Further, the present embodiment exemplifies a case where a thickness of the electromagnetic steel sheet forming the non-edge core 211 and a thickness of the electromagnetic steel sheet forming the edge cores 212 to 213 are the same. Further, the present embodiment exemplifies a case where the planar shape and the number of laminating of the electromagnetic steel sheets forming the non-edge core 211, and the planar shape and the number of laminating of the electromagnetic steel sheets forming the edge cores 212 to 213 are different. For example, when a length in the x-axis direction of the non-edge core 211 and a length in the x-axis direction of the edge cores 212 to 213 are different, the number of laminating of the electromagnetic steel sheets forming the non-edge core 211 and the number of laminating of the electromagnetic steel sheets forming the edge cores 212 to 213 are different, in accordance with the difference in lengths.

The plurality of electromagnetic steel sheets forming each of the non-edge core 211 and the edge cores 212 to 213 are fixed so as not to be separated from each other. A method of fixing the plurality of electromagnetic steel sheets is unlimited. For example, publicly-known various methods such as fixing with an adhesive, fixing by welding, fixing by caulking, and fixing using a fixing member, are employed as the method of fixing the plurality of electromagnetic steel sheets. Note that the thickness of the electromagnetic steel sheet forming the non-edge core 211, and the thickness of the electromagnetic steel sheet forming the edge cores 212 to 213 are not necessarily the same. Further, for the convenience of notation, an illustration of boundary lines of individual electromagnetic steel sheets is omitted in Fig. 2 and Fig. 3.

In Fig. 4, the non-edge cores 211, 311 have center leg portions 2111, 3111, and body portions 2112, 3112. Note that for the convenience of explanation, in Fig. 4, the center leg portions 2111, 3111, and the body portions 2112, 3112 are indicated by a two-dot chain line (a virtual line) (in each drawing, a two-dot chain line is a virtual line). Fig. 4 exemplifies a case where the center leg portion 2111 and the body portion 2112, and the center leg portion 3111 and the body portion 3112 are integrated, respectively. Therefore, there are no boundary lines of the center leg portions 2111, 3111, and the body portions 2112, 3112.

Note that also in a second embodiment, a third embodiment, and a fourth embodiment, in addition to the present embodiment, the name of non-edge core is used for emphasizing that the core is not the edge core. It is also possible to use, not the name of edge core, but any other name such as a center core.

The body portions 2112, 3112 are extended in a direction parallel to the conveyance direction (the y-axis direction) from regions on the upstream side in the conveyance direction (the y-axis negative direction side) of the coils 220, 320 to regions on the downstream side in the conveyance direction (the y-axis positive direction side) of the coils 220, 320, on the back side of the coils 220, 320, respectively. The back side of the coils 220, 320 corresponds to the opposite side of the planned conveyance plane CP side. In the example illustrated in Fig. 4 and Fig. 5, the back side of the coil 220 is the z-axis positive direction side, and the back side of the coil 320 is the z-axis negative direction side. In the explanation below, the upstream side of the conveyance direction will be referred to as an upstream side according to need. Further, the downstream side of the conveyance direction will be referred to as a downstream side according to need. Further, the opposite side of the planned conveyance plane CP side will be referred to as a back side according to need.

The center leg portions 2111, 3111 are extended in a direction of the planned conveyance plane CP from the body portions 2112, 3112 so as to pass through hollow portions of the coils 220, 320, respectively. Here, the hollow portion means (not the outside but) the inside of a circle when each of the coils 220, 320 arranged in a racetrack form is regarded as one circle. It is preferable that positions of the center leg portions 2111, 3111 in the y-axis direction include positions of axial centers of the coils 220, 320 in the y-axis direction. Specifically, coordinates that overlap with y-coordinates of the axial centers of the coils 220, 320 preferably exist in y-coordinates of the center leg portions 2111, 3111. The present embodiment exemplifies a case where positions in an x-y plane (x-y coordinates) of gravity centers of the center leg portions 2111, 3111, and positions in an x-y plane (x-y coordinates) of axial centers of the coils 220, 320 are coincident.

The center leg portions 2111, 3111 are core teeth. The present embodiment exemplifies a case where tip surfaces of the center leg portions 2111, 3111, are pole faces of the non-edge cores 211, 311. The body portions 2112, 3112 are core yokes. Note that the tip surfaces of the center leg portions 2111, 3111 are surfaces that face the planned conveyance plane CP.

As illustrated in Fig. 4, a shape of a surface parallel to the y-z plane of the non-edge cores 211, 311 is a T-shape. Specifically, the non-edge cores 211, 311 are so-called T-shaped cores. Note that the shape on the tip side of the center leg portions 2111, 3111 may also be a tapered shape. In the explanation below, a cross section cut along the y-z plane will be referred to as a y-z cross section according to need.

In Fig. 5, the edge cores 212, 313 have center leg portions 2121, 3121, upstream-side leg portions 2122, 3122, downstream-side leg portions 2123, 3123, and body portions 2124, 3124.

The body portions 2124, 3124 are extended in a direction parallel to the conveyance direction (the y-axis direction) from regions on the upstream side in the conveyance direction (the y-axis positive direction side) of the coils 220, 320 to regions on the downstream side in the conveyance direction (the y-axis negative direction side) of the coils 220, 320, on the back side of the coils 220, 320, respectively.

The center leg portions 2121, 3121 are extended in a direction of the planned conveyance plane CP from the body portions 2124, 3124 so as to pass through the hollow portions of the coils 220, 320, respectively.

The upstream-side leg portions 2122, 3122 are extended in a direction of the planned conveyance plane CP from the body portions 2124, 3124, on the upstream side (the y-axis negative direction side) of the coils 220, 320, respectively.

The downstream-side leg portions 2123, 3123 are extended in a direction of the planned conveyance plane CP from the body portions 2124, 3124, on the downstream side (the y-axis positive direction side) of the coils 220, 320, respectively.

The center leg portion 2121, the upstream-side leg portion 2122, and the downstream-side leg portion 2123 are arranged in a state of having an interval therebetween in the y-axis direction. The center leg portion 3121, the upstream-side leg portion 3122, and the downstream-side leg portion 3123 are also arranged in a state of having an interval therebetween in the y-axis direction.

The center leg portions 2121, 3121, the upstream-side leg portions 2122, 3122, and the downstream-side leg portions 2123, 3123 are core teeth. The present embodiment exemplifies a case where tip surfaces of the center leg portions 2121, 3121, tip surfaces of the upstream-side leg portions 2122, 3122, and tip surfaces of the downstream-side leg portions 2123, 3123 are pole faces of the edge cores 212, 312. The body portions 2124, 3124 are core yokes. Note that the tip surfaces of the center leg portions 2121, 3121, the tip surfaces of the upstream-side leg portions 2122, 3122, and the tip surfaces of the downstream-side leg portions 2123, 3123 are surfaces that face the planned conveyance plane CP.

As illustrated in Fig. 4 and Fig. 5, the present embodiment exemplifies a case where an interval (a length in the z-axis direction) D₁₁ between the center leg portions 2111, 3111 provided to the non-edge cores 211, 311 and the planned conveyance plane CP, and an interval D₁ between the center leg portions 2121, 3121 provided to the edge cores 212, 312 and the planned conveyance plane CP are the same (in this case, it is preferable, but not mandatory, that the interval D₁₁ on the upper inductor 200 side is equal to the interval D₁₁ on the lower inductor 300 side, and the interval D₁ on the upper inductor 200 side is equal to the interval D₁ on the lower inductor 300 side). Therefore, a length D₁₂ in the z-axis direction of the center leg portions 2111, 3111 provided to the non-edge cores 211, 311, and a length D₅ in the z-axis direction of the center leg portions 2121, 3121 provided to the edge cores 212, 312, also are the same.

Further, as illustrated in Fig. 5, the present embodiment exemplifies a case where an interval D₂ between the upstream-side leg portions 2122, 3122 and the planned conveyance plane CP, and an interval D₃ between the downstream-side leg portions 2123, 3123 and the planned conveyance plane CP are the same (in this case, it is preferable, but not mandatory, that the interval D₂ on the upper inductor 200 side is equal to the interval D₂ on the lower inductor 300 side, and the interval D₃ on the upper inductor 200 side is equal to the interval D₃ on the lower inductor 300 side). Therefore, a length D₆ in the z-axis direction of the upstream-side leg portions 2122, 3122, and a length D₇ in the z-axis direction of the downstream-side leg portions 2123, 3123 also are the same.

Further, the present embodiment exemplifies a case where the intervals D₁ to D₃ between the leg portions (the center leg portions 2111, 3111, the upstream-side leg portions 2122, 3122, and the downstream-side leg portions 2123, 3123) provided to the edge cores 212, 312 and the planned conveyance plane CP are the same (in this case, it is preferable, but not mandatory, that the interval D₁ on the upper inductor 200 side is equal to the interval D₁ on the lower inductor 300 side, the interval D₂ on the upper inductor 200 side is equal to the interval D₂ on the lower inductor 300 side, and the interval D₃ on the upper inductor 200 side is equal to the interval D₃ on the lower inductor 300 side). Therefore, the intervals D₁ to D₃ between the leg portions provided to the edge cores 212, 312 and the planned conveyance plane CP, and the interval D₁₁ between the center leg portions provided to the non-edge cores 211, 311 and the planned conveyance plane CP also are the same.

Also in the second embodiment, the third embodiment, and the fourth embodiment, in addition to the present embodiment, the interval D₁ between the center leg portions of the edge cores and the planned conveyance plane, and the intervals D₂ and D₃ between the upstream-side leg portions and the downstream-side leg portions provided to the edge cores and the planned conveyance plane are preferably the same. In like manner, also in the second embodiment, the third embodiment, and the fourth embodiment, in addition to the present embodiment, the interval D₁ between the center leg portions of the edge cores and the planned conveyance plane, and the interval D₁₁ between the center leg portions of the non-edge cores and the planned conveyance plane are preferably the same. Besides, also in the second embodiment, the third embodiment, and the fourth embodiment, in addition to the present embodiment, the length D₁₂ in the z-axis direction of the center leg portions of the non-edge cores and the length D₅ in the z-axis direction of the center leg portions of the edge cores may be the same, and the lengths D₁₂ and D₅ may be the same as the lengths D₆ and D₇ in the z-axis direction of the upstream-side leg portions and the downstream-side leg portions of the edge cores.

However, it does not always have to determine the lengths of the leg portions as described above. For example, the interval D₁₁ between the center leg portion 2111 provided to the non-edge cores 211, 311 and the planned conveyance plane CP, may be longer or shorter than the intervals D₁ to D₃ between the leg portions provided to the edge cores 212 to 213, 312 to 313 and the planned conveyance plane CP. Further, the interval D₁ between the center leg portions 2121, 3121 provided to the edge cores 212 to 213, 312 to 313 and the planned conveyance plane CP, may be longer or shorter than the interval D₂ between the upstream-side leg portions 2122, 3122 provided to the edge cores 212 to 213, 312 to 313 and the planned conveyance plane CP and the interval D₃ between the downstream-side leg portions 2123, 3123 provided to the edge cores 212 to 213, 312 to 313 and the planned conveyance plane CP. Besides, the interval D₂ between the upstream-side leg portions 2122, 3122 provided to the edge cores 212 to 213, 312 to 313 and the planned conveyance plane CP, and the interval D₃ between the downstream-side leg portions 2123, 3123 provided to the edge cores 212 to 213, 312 to 313 and the planned conveyance plane CP, may not be the same.

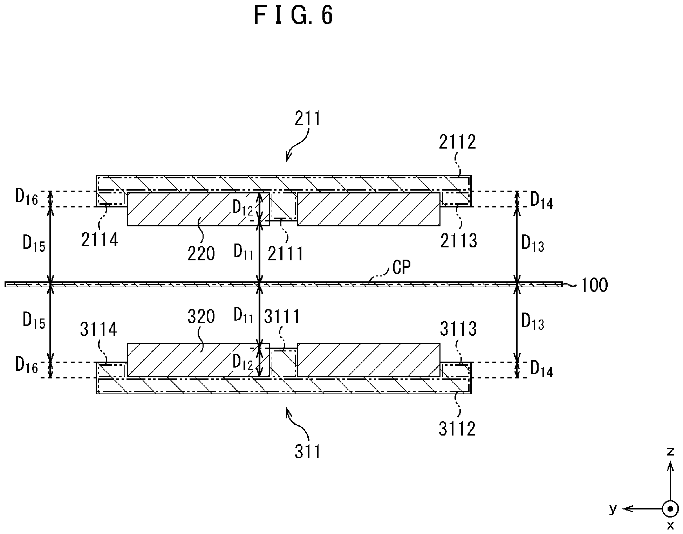

Further, as illustrated in Fig. 4 and Fig. 5, the interval D₂ between the upstream-side leg portions 2122, 3122 provided to the edge cores 212 to 213, 312 to 313 and the planned conveyance plane CP, and the interval D₃ between the downstream-side leg portions 2123, 3123 provided to the edge cores 212 to 213, 312 to 313 and the planned conveyance plane CP, are shorter than an interval between a part of the non-edge core 211 except for the center leg portion 2111 thereof and the planned conveyance plane CP (note that an example regarding the degree of shortness will be described later while referring to Fig. 6). Specifically, the tip surfaces of the upstream-side leg portions 2122, 3122 provided to the edge cores 212 to 213, 312 to 313 are positioned on the planned conveyance plane CP side, relative to a region of the non-edge core 211 except for the center leg portion 2111 thereof.

As illustrated in Fig. 5, a shape of a y-z cross section of the edge cores 212, 312 is an E-shape. Specifically, the edge cores 212, 313 are so-called E-shaped cores (note that all lengths of three horizontal lines of E are the same in the example illustrated in Fig. 5).

Note that a y-z cross section of the edge cores 213, 313 also is the same as the y-z cross section of the edge cores 212, 312 illustrated in Fig. 5. In Fig. 5, (213), (2131), (2132), (2133), (230b), (313), (3131), (3132), (3133), (330b) given after 212, 2121, 2122, 2123, 230a, 312, 3121, 3122, 3123, 330a, respectively, indicate this. Further, as described above, the two-dot chain line indicating the center leg portions 2121, 3121, the upstream-side leg portions 2122, 3122, the downstream-side leg portions 2123, 3123, and the body portions 2124, 3124 in Fig. 5 are the virtual lines.

As illustrated in Fig. 1 to Fig. 3, a length in the x-axis direction of the circumferential portions of the coils 220, 320 is longer than the width of the band-shaped steel sheet 100. Concretely, the length in the x-axis direction of the circumferential portions of the coils 220, 320 is longer than a maximum processable width of the induction heating device. As a result of this, when seen from the z-axis direction, the coils 220, 320 have a length in the x-axis direction that is long enough to cover the maximum processable width of the induction heating device. Here, the maximum processable width of the induction heating device indicates a range in the x-axis direction in which even if the band-shaped steel sheet 100 with a maximum width capable of being heated by the induction heating device moves in the positive or negative direction of x-axis (due to meandering or the like), the band-shaped steel sheet 100 may exist in the range. Further, both ends in the x-axis direction of the circumferential portions of the coils 220, 320 exist on the outer side of both ends in the x-axis direction of the band-shaped steel sheet 100 (namely, both ends of the above-described maximum processable width of the induction heating device). Specifically, the ends on the x-axis positive direction side of the circumferential portions of the coils 220, 320 exist on the x-axis positive direction side, relative to the end on the x-axis positive direction side of the band-shaped steel sheet 100 (namely, the above-described maximum processable width of the induction heating device). Further, the ends on the x-axis negative direction side of the circumferential portions of the coils 220, 320 exist on the x-axis negative direction side, relative to the end on the x-axis negative direction side of the band-shaped steel sheet 100 (namely, the above-described maximum processable width of the induction heating device).

As illustrated in Fig. 1, the alternating-current power supply 400 is electrically connected to the coils 220, 320. As illustrated in Fig. 1, in the present embodiment, one end portion 221 of the circumferential portion of the coil 220 is electrically connected to one terminal 401 out of two output terminals of the alternating-current power supply 400. Further, the other end portion 222 of the circumferential portion of the coil 220 is electrically connected to the other terminal 402 out of the two output terminals of the alternating-current power supply 400.

Further, out of two end portions of the circumferential portion of the coil 320, one end portion 321 at a position facing the one end portion 221 of the circumferential portion of the coil 220 in the z-axis direction is electrically connected to one terminal 401 out of two output terminals of the alternating-current power supply 400. Further, out of the two end portions of the circumferential portion of the coil 320, the other end portion 322 at a position facing the other end portion 222 of the circumferential portion of the coil 220 in the z-axis direction is electrically connected to the other terminal 402 out of the two output terminals of the alternating-current power supply 400.

As described above, in the present embodiment, the coil 220 and the coil 320 are connected in parallel to the alternating-current power supply 400 so that the winding directions of the coil 220 and the coil 320 are mutually the same when seen from the alternating-current power supply 400.

Therefore, as illustrated in Fig. 1, when seen from the same viewpoint at the same time, directions of alternating currents flowing through the mutually facing regions of the coil 220 and the coil 320 are mutually the same (refer to arrow mark lines indicated in the coil 220 and the coil 320 in Fig. 1).

The arrow mark lines indicated in the coil 220 and the coil 320 in Fig. 1 mean that when the induction heating device is viewed from above, the direction of the alternating current flowing through the coil 220 is clockwise (right-handed), and the direction of the alternating current flowing through the coil 320 is clockwise (right-handed).

Here, instantaneous values of the alternating currents flowing through the coil 220 and the coil 320 from the alternating-current power supply 400 are respectively the same. Note that a waveform of the alternating current is a sine wave, for example. However, the waveform of the alternating current is unlimited to the sine wave. The waveform of the alternating current may be a waveform same as one capable of being used in a general induction heating device.

As described above, the coils 220, 320 are arranged on the front side and the rear side, respectively, of the planned conveyance plane CP so that alternating magnetic fields generated through energization of the alternating currents in mutually the same direction intersect the planned conveyance plane CP of the band-shaped steel sheet 100. The present embodiment exemplifies a case where the two coils 220, 320 form a pair of coils. One of the coils forming the pair of coils is the coil 220, and the other coil forming the pair of coils is the coil 320.

Note that as long as the alternating currents as above flow through the coil 220 and the coil 320, there is no need to connect one alternating-current power supply to the coils 220, 320, as illustrated in Fig. 1. For example, the alternating-current power supply connected to the coil 220 and the alternating-current power supply connected to the coil 320 may be separate alternating-current power supplies as long as frequencies of currents that flow from those alternating-current power supplies are synchronized.

Further, the present embodiment exemplifies a case where the number of coil arranged on the front side of the planned conveyance plane CP out of the coils forming the pair of coils provided to the induction heating device, and the number of coil arranged on the rear side of the planned conveyance plane CP out of the coils forming the pair of coils, are respectively one. However, the number of coil arranged on the front side of the planned conveyance plane CP out of the coils forming the pair of coils provided to the induction heating device, and the number of coil arranged on the rear side of the planned conveyance plane CP out of the coils forming the pair of coils, may be respectively two or more. For example, on the front side of the planned conveyance plane CP, two or more coils may be arranged in a state of having an interval therebetween in the y-axis direction. In like manner, for example, on the rear side of the planned conveyance plane CP, two or more coils may be arranged in a state of having an interval therebetween in the y-axis direction. Through the two or more coils arranged on the front side of the planned conveyance plane CP, out of the coils forming the pair of coils provided to the induction heating device, an alternating current in a direction same as that of the current flowing through the coil 220 flows, for example. In this case, through the two or more coils arranged on the rear side of the planned conveyance plane CP, out of the coils forming the pair of coils, an alternating current in a direction same as that of the current flowing through the coil 320 flows, for example.

Each of the shield plates 230a, 230b is one example of a shield member for preventing overheating of the edge portion of the band-shaped steel sheet 100 by adjusting (reducing) the degree of electromagnetic coupling between the coil 220 and the band-shaped steel sheet 100. Concretely, the shield plates 240a, 240b are non-magnetic conductor plates arranged between the edge portions of the band-shaped steel sheet 100 and the edge cores 212, 213 of the upper core 210, in a state of having an interval with respect to these. A length in the y-axis direction of the shield plates 230a, 230b is preferably longer than the length in the y-axis direction of the upper core 210 (the edge cores 212, 213). Further, upstream-side end portions of the shield plates 230a, 230b are preferably positioned on the upstream side of the upstream-side end of the upper core 210. In like manner, downstream-side end portions of the shield plates 240a, 240b are preferably positioned on the downstream side of the downstream-side end of the upper core 210 (refer to Fig. 5).

The shield plates 230a to 230b may move along the x-axis direction within their movable ranges. The shield plates 230a, 230b move along accordance with the width of the band-shaped steel sheet 100 so that they position between the edge portions of the band-shaped steel sheet 100 and the edge cores 212, 213 of the upper core 210. Further, the shield plates 230a, 230b may move along the x-axis direction when the band-shaped steel sheet 100 meanders. For example, the shield plates 230a, 230b may move along the x-axis direction (a direction in which the band-shaped steel sheet 100 meanders), by an amount same as a meandering amount of the band-shaped steel sheet 100.

Note that a configuration for moving the shield plates 230a to 230b along the x-axis direction is realized by a publicly-known technique using an actuator for moving the shield plates 230a to 230b along the x-axis direction, for example. Therefore, a detailed explanation of the configuration will be omitted here. Further, a configuration for detecting a meandering amount of sheet is also realized by a publicly-known technique using a sensor that detects a position of an end portion in the x-axis direction of the sheet. Therefore, a detailed explanation of the configuration will be omitted here. As these publicly-known techniques, there is a technique described in Japanese Patent No. 6658977, for example.

Further, when the meandering amount of the band-shaped steel sheet 100 is an order of cm (less than 10 cm, for example), it is preferable to move only the shield plates 230a, 230b in the x-axis direction. When the meandering amount of the band-shaped steel sheet 100 exceeds the order of cm (10 cm or more, for example), it is preferable to move the entire induction heating device (the upper inductor 200 and the lower inductor 300) in the x-axis direction. For example, the entire induction heating device (the upper inductor 200 and the lower inductor 300) may be moved along the x-axis direction (the direction in which the band-shaped steel sheet 100 meanders) by an amount same as the meandering amount of the band-shaped steel sheet 100.

The shield plates 230a to 230b are arranged at the positions close to the upper core 210. Therefore, as explained in the section of TECHNICAL PROBLEM, a large eddy current is generated in the shield plates 230a, 230b due to the alternating magnetic field from the upper core 210 (the edge cores 212, 213). A direction of the alternating magnetic field generated by this eddy current and a direction of the alternating magnetic field from the upper core 210 (the edge cores 212, 213) are opposite each other. Therefore, the alternating magnetic field from the upper core 210 (the edge cores 212, 213) is likely to be reflected at the shield plates 230a, 230b.

Accordingly, in the present embodiment, a case is exemplified in which positions in the x-axis direction of the non-edge core 211 and the edge cores 212 to 213 are determined as follows. Specifically, the positions in the x-axis direction of the non-edge core 211 and the edge cores 212 to 213 may be determined so that when the shield plates 230a, 230b are moved, within the movable ranges thereof in the x-axis direction, to the positions closest to the center position in the x-axis direction of the induction heating device, positions in the x-axis direction (x-coordinates) of sheet center-side end portions of the edge cores 212, 213, and positions in the x-axis direction of sheet center-side end portions of the shield plates 230a, 230b are the same, respectively. Here, the sheet center side indicates a side close to the center position in the x-axis direction of the induction heating device. On the x-axis positive direction side relative to the center in the x-axis direction of the induction heating device, the sheet center side is the x-axis negative direction side. On the other hand, on the x-axis negative direction side relative to the center in the x-axis direction of the induction heating device, the sheet center side is the x-axis positive direction side.

For example, in Fig. 3, the positions in the x-axis direction of the non-edge core 211 and the edge core 212 may be determined so that when the shield plate 230a is moved to the most x-axis negative direction side within its movable range, a position xₛ₁ in the x-axis direction of the end portion on the x-axis negative direction side of the shield plate 230a, and a position xₑ₁ in the x-axis direction of the end portion on the x-axis negative direction side of the edge core 212 are the same.

Fig. 3 exemplifies a case where positions xₛ₁, xₛ₂ in the x-axis direction of the sheet center-side end portions of the edge cores 212, 213, and positions xₑ₁, xₑ₂ in the x-axis direction of the sheet center-side end portions of the shield plates 230a, 230b are the same, respectively (xₛ₁ = xₑ₁, xₛ₂ = xₑ₂). Therefore, Fig. 3 illustrates a state where the shield plates 230a, 230b are moved, within the movable ranges thereof in the x-axis direction, to the positions closest to the center position in the x-axis direction of the induction heating device.

Specifically, Fig. 3 exemplifies a case where the position xₛ₁ in the x-axis direction of the end portion on the x-axis negative direction side of the shield plate 230a, and the position xₑ₁ in the x-axis direction of the end portion on the x-axis negative direction side of the edge core 212 are the same. In like manner, Fig. 3 exemplifies a case where the position xₛ₂ in the x-axis direction of the end portion on the x-axis positive direction side of the shield plate 230b, and the position xₑ₂ in the x-axis direction of the end portion on the x-axis positive direction side of the edge core 213 are the same. Therefore, Fig. 3 illustrates a state where the shield plate 230a is moved to the most x-axis negative direction side within its movable range, and the shield plate 230b is moved to the most x-axis positive direction side within its movable range.

As described above, the edge cores 212 to 213 are so-called E-shaped cores. Therefore, by determining the positions in the x-axis direction of the non-edge core 211 and the edge cores 212 to 213 as described above, even if the alternating magnetic fields (magnetic fluxes) from three pole faces of the edge cores 212, 213, respectively, are reflected by the shield plates 230a, 230b, the alternating magnetic fields return to the upper core 210 from any of the three pole faces. Therefore, the alternating magnetic fields (magnetic fluxes) reflected by the shield plates 230a, 230b can be suppressed from being diffused as a noise to the periphery of the induction heating device. Here, the three pole faces of the edge core 212 are the tip surface of the center leg portion 2121, the tip surface of the upstream-side leg portion 2122, and the tip surface of the downstream-side leg portion 2123. The three pole faces of the edge core 213 are the tip surface of the center leg portion 2131, the tip surface of the upstream-side leg portion 2132, and the tip surface of the downstream-side leg portion 2133.

On the other hand, by determining the positions in the x-axis direction of the non-edge core 211 and the edge cores 212 to 213 as described above, the non-edge core 211 does not face the shield plates 230a to 230b. Therefore, by forming the non-edge core 211 as a so-called T-shaped core, the alternating magnetic field from the pole face (the tip surface of the center leg portion 2111) of the non-edge core 211 can be made to easily reach the band-shaped steel sheet 100. Therefore, it is possible to efficiently heat a center-side region in the x-axis direction of the induction heating device.

Note that when the influence due to the alternating magnetic fields (magnetic fluxes) reflected by the shield plates 230a, 230b is small, for example, the relation between the positions xₛ₁, xₛ₂ in the x-axis direction of the sheet center-side end portions of the edge cores 212, 213, and the positions xₑ₁, xₑ₂ in the x-axis direction of the sheet center-side end portions of the shield plates 230a, 230b may not be determined as described above. The case where the influence due to the alternating magnetic fields (magnetic fluxes) reflected by the shield plates 230a, 230b is small, includes, for example, at least either of a case where an object (an electronic device, for example) that is influenced by the alternating magnetic fields (magnetic fluxes) does not exist in the vicinity of the induction heating device, and a case where the band-shaped steel sheet 100 as a heating target is of low quality.

The movable ranges in the x-axis direction of the shield plates 230a, 230b are decided when designing the induction heating device, while considering mainly the maximum processable width and a minimum processable width of the induction heating device. Here, the minimum processable width of the induction heating device indicates a range in the x-axis direction in which even if the band-shaped steel sheet 100 with a minimum width capable of being heated by the induction heating device moves in the positive or negative direction of x-axis (due to meandering or the like), the band-shaped steel sheet 100 may exist in the range. Further, as described above, the maximum processable width of the induction heating device indicates a range in the x-axis direction in which even if the band-shaped steel sheet 100 with a maximum width capable of being heated by the induction heating device moves in the positive or negative direction of x-axis (due to meandering or the like), the band-shaped steel sheet 100 may exist in the range. The positions x_{s1,} xₛ₂ in the x-axis direction of the sheet center-side end portions of the edge cores 212, 213 (boundary positions in the x-axis direction between the non-edge core 211 and the edge cores 212, 213) cannot be moved during the use of the induction heating device, unlike the shield plates 230a, 230b. Accordingly, the positions xₛ₁, xₛ₂ in the x-axis direction of the sheet center-side end portions of the edge cores 212, 213 are preferably decided while considering various factors other than the above-described movable ranges in the x-axis direction of the shield plates 230a, 230b. The various factors include, for example, a situation of arrangement of an electronic device in the vicinity of the induction heating device, a design objective regarding the heating efficiency of the band-shaped steel sheet 100, a sheet width distribution of the band-shaped steel sheet 100 to be processed by the induction heating device, and the like. In a case where there is a change in the above-described factors such as a case where, after installation of the induction heating device, an electronic device is newly arranged in the vicinity of the induction heating device, the induction heating device may be remodeled so that the positions xₛ₁, xₛ₂ in the x-axis direction of the sheet center-side end portions of the edge cores 212, 213 are corrected to positions according to the change.

Similarly to the upper inductor 200, the lower inductor 300 also includes a lower core 310, a coil 320, and shield plates 330a, 330b, and has a configuration same as that of the upper inductor 200. The lower core 310 has a non-edge core 311, and edge cores 312, 313. The non-edge core 311 has a center leg portion 3111 and a body portion 3112. The edge cores 312, 313 have center leg portions 3121, 3131, upstream-side leg portions 3122 to 3122, downstream-side leg portions 3132 to 3132, and body portions 3124, 3134. Note that the meaning of notation of two-dot chain line indicated with respect to the lower core 310 in Fig. 4 and Fig. 5, and the meaning of notation of reference numerals indicated with parentheses with respect to the lower core 310 in Fig. 5, are the same meanings of notations with respect to the upper core 210. Further, the meanings of xₛ₃, xₛ₄, xₑ₃, xₑ₄ illustrated in Fig. 5 are the same meanings of xₛ₁, xₛ₂, xₑ₁, xₑ₂, respectively.

The present embodiment exemplifies a case where the upper core 210 and the lower core 310 form cores arranged by a set for each coil forming a pair of coils. One of the cores forming the pair of cores is the upper core 210, and the other core forming the pair of cores is the lower core 310.

As described above, in the present embodiment, the non-edge cores 211, 311 are formed as so-called T-shaped cores. Further, the two edge cores 212 to 213, and 312 to 313 arranged on both sides in the x-axis direction of the non-edge cores 211, 311, respectively, are formed as so-called E-shaped cores. Further, the interval between the upstream-side leg portions 2122, 3122 and the downstream-side leg portions 2123, 3123 provided to the edge cores 212, 313 and the planned conveyance plane CP, is made to be shorter than the interval between the parts of the non-edge cores 211, 311 except for the center leg portions 2111, 3111 thereof and the planned conveyance plane (CP). Therefore, at the edge portions of the band-shaped steel sheet 100 that may be overheated with the transverse flux induction heating device, the suppression of diffusion of the alternating magnetic field (magnetic flux) from the core can be realized with priority over the suppression of reduction in magnitude of the alternating magnetic field applied to the band-shaped steel sheet 100 (the heating efficiency of the band-shaped steel sheet 100). On the other hand, in the sheet center-side region relative to the edge portions of the band-shaped steel sheet 100, the suppression of reduction in magnitude of the alternating magnetic field applied to the band-shaped steel sheet 100 can be realized with priority over the suppression of diffusion of the alternating magnetic field (magnetic flux) from the core. Therefore, it is possible to realize both the generation of alternating magnetic field with desired magnitude and the suppression of diffusion of the alternating magnetic field to the periphery as unintentional heating or noise. Accordingly, it is possible to materialize the induction heating device that aims to attain both the suppression of reduction in magnitude of the alternating magnetic field applied to the band-shaped steel sheet 100 and the suppression of diffusion of the alternating magnetic field. Such an effect is more significant as the power of the induction heating device increases. Although the power of the induction heating device of the present embodiment is unlimited, from such a viewpoint, the power of the induction heating device is preferably 10 kW order or more (10 kW or more, for example) since such an effect is exhibited significantly.

Further, in the present embodiment, the positions in the x-axis direction of the non-edge core 211 and the edge cores 212 to 213 may be determined so that when the shield plates 230a, 230b are moved, within their movable ranges in the x-axis direction, to the positions closest to the center position in the x-axis direction of the induction heating device, the positions xₑ₁, xₑ₂ in the x-axis direction of the sheet center-side end portions of the edge cores 212, 213, and the positions xₛ₁, xₛ₂ in the x-axis direction of the sheet center-side end portions of the end portions of the shield plates 230a, 230b are the same, respectively. Therefore, even when the shield plates 230a, 230b are used for suppressing the overheating of the edge portions of the band-shaped steel sheet 100, it is possible to suppress the heating of the peripheral object (the electronic devices, for example) and the generating of noise in the peripheral object, due to the diffusion of the alternating magnetic field from the core, from the induction heating device.

### <Modified example>

The present embodiment exemplified the case where, when the shield plates 230a, 230b are moved, within their movable ranges in the x-axis direction, to the positions closest to the center position in the x-axis direction of the induction heating device, the positions xₑ₁, xₑ₂ in the x-axis direction of the sheet center-side end portions of the edge cores 212, 213, and the positions xₛ₁, xₛ₂ in the x-axis direction of the sheet center-side end portions of the end portions of the shield plates 230a, 230b are the same, respectively. This is preferable since it is possible to increase the effect of suppressing the diffusion of the alternating magnetic field from the core, from the induction heating device, as described above. However, it is not necessarily designed as above. For example, when the shield plates 230a, 230b are moved, within their movable ranges in the x-axis direction, to the positions closest to the center position in the x-axis direction of the induction heating device, the positions xₑ₁, xₑ₂ in the x-axis direction of the sheet center-side end portions of the edge cores 212, 213 may be positioned on the sheet center side, or on the opposite side of the sheet center side relative to the positions xₛ₁, xₛ₂ in the x-axis direction of the sheet center-side end portions of the shield plates 230a, 230b, respectively. Note that in the following explanation, the opposite side of the sheet center side will be referred to as a sheet end side according to need. Here, on the x-axis positive direction side relative to the center in the x-axis direction of the induction heating device, the sheet end side is the x-axis positive direction side. On the other hand, on the x-axis negative direction side relative to the center in the x-axis direction of the induction heating device, the sheet end side is the x-axis negative direction side.

Further, the present embodiment exemplified the case where the non-edge cores 211, 311 are formed as so-called T-shaped cores. However, the non-edge cores 211, 311 are unlimited to the T-shaped cores as long as the distance (in the z-axis direction) between the tip surfaces of the upstream-side leg portions 2122, 3122 provided to the edge cores 212 to 213, 312 to 313, and the band-shaped steel sheet 100 is shorter than the distance (in the z-axis direction) between the region of the non-edge core 211 except for the center leg portion 2111 thereof and the band-shaped steel sheet 100. For example, the non-edge cores 211, 311 may be formed as illustrated in Fig. 6 (Fig. 6 is a sectional view corresponding to Fig. 4).

In the example illustrated in Fig. 6, the non-edge core 211 has an upstream-side leg portion 2113 and a downstream-side leg portion 2114, in addition to the center leg portion 2111 and the body portion 2112. In the example illustrated in Fig. 6, the upstream-side leg portion 2113 is extended in a direction of the planned conveyance plane CP from the body portion 2112, on the upstream side (the y-axis negative direction side) of the coil 220. The downstream-side leg portion 2114 is extended in a direction of the planned conveyance plane CP from the body portion 2112, on the downstream side (the y-axis positive direction side) of the coil 220.

The upstream-side leg portion 2113 and the downstream-side leg portion 2114 are arranged on both sides of the center leg portion 2111 in the y-axis direction, in a state of having an interval with respect to the center leg portion 2111. In the example illustrated in Fig. 6, not only the tip surface of the center leg portion 2111 but also a tip surface of the upstream-side leg portion 2113 and a tip surface of the downstream-side leg portion 2114 are pole faces.

In Fig. 6, the length D₁₂ in the z-axis direction of the center leg portions 2111, 3111 provided to the non-edge core 211 is longer than lengths D₁₄, D₁₆ in the z-axis direction of the upstream-side leg portions 2113, 3113, and the downstream-side leg portions 2114, 3114 provided to the non-edge cores 211, 311. For example, from a viewpoint of the suppression of diffusion of the alternating magnetic field from the core, ratios of the lengths D₁₄, D₁₆ in the z-axis direction of the upstream-side leg portions 2113, 3113, and the downstream-side leg portions 2114, 3114 provided to the non-edge cores 211, 311, to the length D₁₂ in the z-axis direction of the center leg portions 2111, 3111 provided to the non-edge core 211, may be respectively 0.95 or less (D₁₄ / D₁₂ ≤ 0.95, D₁₆ / D₁₂ ≤ 0.95). Further, relations of D₁₃ ≥ D₁₁ + D₁₂ × 0.05 and D₁₅ ≥ D₁₁ + D₁₂ × 0.05 may also be satisfied. Further, for example, from a viewpoint of the suppression of reduction in the heating efficiency of the band-shaped steel sheet 100, the ratios of the lengths D₁₄, D₁₆ in the z-axis direction of the upstream-side leg portions 2113, 3113, and the downstream-side leg portions 2114, 3114 provided to the non-edge cores 211, 311, to the length D₁₂ in the z-axis direction of the center leg portions 2111, 3111 provided to the non-edge core 211, may be respectively 0.90 or less (D₁₄ / D₁₂ ≤ 0.90, D₁₆ / D₁₂ ≤ 0.90). Further, relations of D₁₃ ≥ D₁₁ + D₁₂ × 0.10 and D₁₅ ≥ D₁₁ + D₁₂ × 0.10 may also be satisfied.

Further, Fig. 5 and Fig. 6 exemplify a case where the interval D₁₃ between the upstream-side leg portion 2113 provided to the non-edge cores 211, 311 and the planned conveyance plane CP, is longer than the interval D₂ between the upstream-side leg portion 2122 provided to the edge cores 212 to 213, 312 to 313 and the planned conveyance plane CP. Therefore, the length D₁₄ in the z-axis direction of the upstream-side leg portion 2113 provided to the non-edge cores 211, 311 is shorter than the length D₆ in the z-axis direction of the upstream-side leg portion 2122 provided to the edge cores 212 to 213, 312 to 313. In like manner, Fig. 5 and Fig. 6 exemplify a case where the interval D₁₅ between the downstream-side leg portion 2114 provided to the non-edge cores 211, 311 and the planned conveyance plane CP, is longer than the interval D₃ between the downstream-side leg portion 2123 provided to the edge cores 212 to 213, 312 to 313 and the planned conveyance plane CP. Therefore, the length D₁₆ in the z-axis direction of the downstream-side leg portion 2114 provided to the non-edge cores 211, 311 is shorter than the length D₆ in the z-axis direction of the downstream-side leg portion 2123 provided to the edge cores 212 to 213, 312 to 313. Accordingly, even if the non-edge cores 211, 311 are formed as illustrated in Fig. 6, the interval D₂ between the upstream-side leg portions 2122, 3122 provided to the edge cores 212 to 213, 312 to 313 and the planned conveyance plane CP, and the interval D₃ between the downstream-side leg portions 2123, 3123 provided to the edge cores 212 to 213, 312 to 313 and the planned conveyance plane CP, are shorter than the interval between the part of the non-edge core 211 except for the center leg portion 2111 thereof and the planned conveyance plane CP.

For example, from a viewpoint of the suppression of diffusion of the alternating magnetic field from the core, the interval D₂ between the upstream-side leg portions 2122, 3122 provided to the edge cores 212 to 213, 312 to 313 and the planned conveyance plane CP may be shorter than the interval between the parts of the non-edge cores 211, 311 except for the center leg portion 2111 thereof and the planned conveyance plane CP, by 0.05 times or more the length D₆ in the z-axis direction of the upstream-side leg portions 2122, 3122. In like manner, the interval D₃ between the downstream-side leg portions 2123, 3123 provided to the edge cores 212 to 213, 312 to 313 and the planned conveyance plane CP may be shorter than the interval between the parts of the non-edge cores 211, 311 except for the center leg portion 2111 thereof, and the planned conveyance plane CP, by 0.05 times or more the length D₇ in the z-axis direction of the downstream-side leg portions 2123, 3123.

Further, for example, from a viewpoint of the suppression of reduction in the heating efficiency of the band-shaped steel sheet 100, the interval D₂ between the upstream-side leg portions 2122, 3122 provided to the edge cores 212 to 213, 312 to 313 and the planned conveyance plane CP may be shorter than the interval between the parts of the non-edge cores 211, 311 except for the center leg portion 2111 thereof and the planned conveyance plane CP, by 0.10 times or more or 0.20 times or more the length D₆ in the z-axis direction of the upstream-side leg portions 2122, 3122. In like manner, the interval D₃ between the downstream-side leg portions 2123, 3123 provided to the edge cores 212 to 213, 312 to 313 and the planned conveyance plane CP may be shorter than the interval between the parts of the non-edge cores 211, 311 except for the center leg portion 2111 thereof and the planned conveyance plane CP, by 0.10 times or 0.20 times or more the length D₇ in the z-axis direction of the downstream-side leg portions 2123, 3123.

Note that also in the second embodiment, the third embodiment, and the fourth embodiment, in addition to the present embodiment, the same degree of shortness as described above (namely, 0.05 times or more, 0.10 times or more or 0.20 times or more) may be set.

If the non-edge cores 211, 311 illustrated in Fig. 6 are used, the heating efficiency of the band-shaped steel sheet 100 is lowered but the diffusion of alternating magnetic field from the core can be suppressed, when compared to the case of using the non-edge cores 211, 311 illustrated in Fig. 1 to Fig. 5. Therefore, in view of the suppression of reduction in the heating efficiency of the band-shaped steel sheet 100 and the suppression of diffusion of the alternating magnetic field from the core, for example, it may be decided whether the non-edge cores 211, 311 having the center leg portion 2111 and having no upstream-side leg portion and downstream-side leg portion (refer to Fig. 4) is employed, or the non-edge cores 211, 311 having the center leg portion 2111, the upstream-side leg portion 2113, and the downstream-side leg portion 2114 (refer to Fig. 6) is employed.

The non-edge core 311 of the lower core 310 also has the upstream-side leg portion 3113 and the downstream-side leg portion 3114, in addition to the center leg portion 3111 and the body portion 3112, similarly to the non-edge core 211 of the upper core 210. The upstream-side leg portion 3113 and the downstream-side leg portion 3114 are arranged on both sides of the center leg portion 3111 in the y-axis direction in a state of having an interval with respect to the center leg portion 3111.

Further, the present embodiment exemplified the case where the y-z cross section of the edge cores 212, 213 is the same regardless of the position in the x-axis direction. However, it is not necessarily designed as above. For example, in the edge cores 212, 213, the E-shaped core arranged on the sheet end side and the E-shaped core arranged on the sheet center side are not necessarily the same, and may have different shapes. For example, an interval between the three leg portions (the center leg portion, the upstream-side leg portion, and the downstream-side leg portion) of the E-shaped core arranged on the sheet end side and the planned conveyance plane CP, may be longer or shorter than an interval between the three leg portions (the center leg portion, the upstream-side leg portion, and the downstream-side leg portion) of the E-shaped core arranged on the sheet center side and the planned conveyance plane CP.

Further, the present embodiment exemplified the case where the non-edge cores 211, 311, and the edge cores 212 to 213, 312 to 313 are formed of the same material (the electromagnetic steel sheet). However, the non-edge cores 211, 311, and the edge cores 212 to 213, 312 to 313 are not necessarily formed of the same material. For example, at least either the non-edge cores 211, 311, or the edge cores 212 to 213, 312 to 313 may be formed of soft magnetic ferrite.

Further, the present embodiment exemplified the case where the induction heating device includes the shield plates 230a, 230b. However, it is not necessarily designed as above. For example, at a position where each of the shield plates 230a, 230b is arranged, a secondary coil, as one example of a shield member, for adjusting (reducing) the degree of electromagnetic coupling between the coil 220 and the band-shaped steel sheet 100 may be arranged for preventing overheating of the edge portion of the band-shaped steel sheet 100.

The various modified examples of the present embodiment have been described above. A modified example combining at least two of the respective modified examples including the modified examples of the present embodiment explained before the explanation of the item of <Modified example>, may be applied to the induction heating device of the present embodiment.

### (Second embodiment)

Next, a second embodiment of the present invention will be described. The above-described first embodiment exemplified the case where each of the upper core 210 and the lower core 310 is one core. Therefore, there is no gap in the x-axis direction in the upper core 210 and the lower core 310.

With a transverse flux induction heating device, a core loss is generated, resulting in that the core generates heat and a temperature thereof increases. Further, in the transverse flux induction heating device, in order to generate a large magnetic field, a coil for heating the band-shaped steel sheet 100 is wound around the core. Therefore, significant heat generation of the core occurs. Further, the significant heat generation of the core occurs in an induction heating device having a large power supply. Regarding this point, in the techniques described in Patent Literatures 5 and 6, the heat generation of the core is not considered but the core is divided into a plurality of pieces. A cross-sectional area of the cores, as a whole, divided into the plurality of pieces, becomes larger than a surface area of the undivided core. The larger the surface area of the core is, the more the heat dissipation from the core is accelerated. Therefore, the heat generation of the cores divided into the plurality of pieces is suppressed more, when compared to the heat generation of the undivided core.

When the core is divided into a plurality of pieces in the x-axis direction, a temperature of the core is lowered. However, an alternating magnetic field in the core is divided. Therefore, when the core is divided into the plurality of pieces in the x-axis direction, it may not be able to apply an alternating magnetic field with a desired magnitude to the band-shaped steel sheet 100. Consequently, the heating efficiency of the band-shaped steel sheet 100 deteriorates, and there is generated a bias in the temperature distribution in the x-axis direction of the band-shaped steel sheet 100. The present inventors confirmed that when a core of a general transverse flux induction heating device is divided into a plurality of pieces in the x-axis direction, a temperature of an edge portion of the band-shaped steel sheet 100 is sometimes lowered by 100°C or more than a temperature of another portion of the band-shaped steel sheet 100.

If the number of division of the core is reduced in order to suppress such a reduction in temperature of the band-shaped steel sheet 100 (namely, in order to make the alternating magnetic fields with desired magnitude intersect the band-shaped conductor sheet), it is impossible to lower the temperature of the core to a desired temperature. On the other hand, if the number of division of the core is increased in order to lower the temperature of the core to the desired temperature, it is impossible to suppress the reduction in temperature of the band-shaped steel sheet 100 (namely, it is impossible to make the alternating magnetic fields with desired magnitude intersect the band-shaped conductor sheet). In the techniques described in Patent Literatures 5 and 6, the core is divided for suppressing the overheating of the edge portion of the band-shaped steel sheet 100. Therefore, the number of division of the core is determined so that the overheating of the edge portion of the band-shaped steel sheet 100 and the heat generation of the core can be suppressed. Accordingly, the techniques described in Patent Literatures 5 and 6 do not even recognize the problem that the increase in temperature of the core and the reduction in magnitude of the alternating magnetic field applied to the conductor are suppressed. As described above, the conventional techniques have a problem that it is impossible to simultaneously satisfy both the suppression of the increase in temperature of the core and the suppression of the reduction in magnitude of the alternating magnetic field applied to the band-shaped conductor.

Accordingly, in the present embodiment, one example of an induction heating device that not only aims to attain both the suppression of reduction in magnitude of the alternating magnetic field applied to the band-shaped steel sheet 100 and the suppression of diffusion of the alternating magnetic field as in the first embodiment, but also can simultaneously satisfy both the suppression of the increase in temperature of the core and the suppression of the reduction in magnitude of the alternating magnetic field, will be explained. As described above, in the present embodiment, a configuration for simultaneously satisfying both the suppression of the increase in temperature of the core and the suppression of the reduction in magnitude of the alternating magnetic field, is added to the first embodiment. Therefore, in the explanation of the present embodiment, parts same as those of the first embodiment are denoted by the same reference numerals as those given to Fig. 1 to Fig. 6, and a detailed explanation thereof will be omitted.

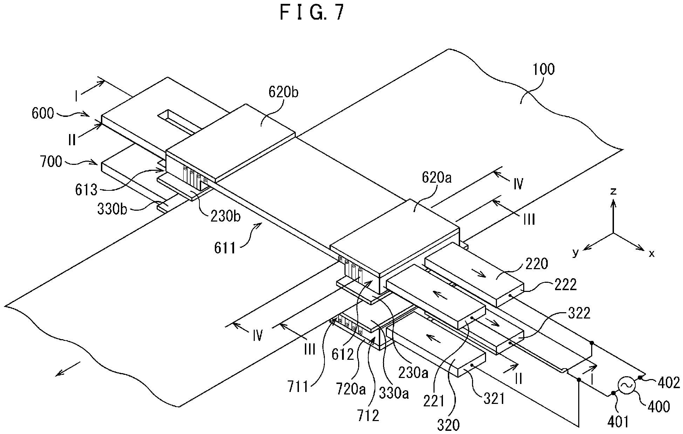

Fig. 7 is a view illustrating one example of an external configuration of an induction heating device. Fig. 7 is a view corresponding to Fig. 1.

The induction heating device illustrated in Fig. 7 includes an upper inductor 600 and a lower inductor 700. The upper inductor 600 and the lower inductor 700 are arranged at positions facing each other with the planned conveyance plane CP interposed therebetween. The upper inductor 600 and the lower inductor 700 have the same configuration. Therefore, the upper inductor 600 will be explained here in detail, and a detailed explanation regarding the lower inductor 700 will be omitted according to need. Note that an interval between the upper inductor 600 and the band-shaped steel sheet 100, and an interval between the lower inductor 700 and the band-shaped steel sheet 100 may be the same or different. Similarly to the first embodiment, the present embodiment also exemplifies a case where the induction heating device has a shape in a relation of mirror symmetry in which a y-z plane at a center in the x-axis direction of the induction heating device is set to a plane of symmetry. When an interval between the upper inductor 600 and the planned conveyance plane CP and an interval between the lower inductor 700 and the planned conveyance plane CP are the same, the induction heating device has a shape in a relation of mirror symmetry in which the planned conveyance plane CP is set to a plane of symmetry.

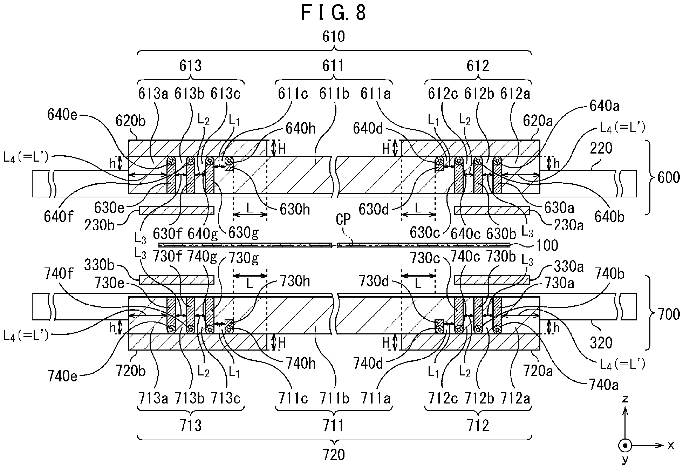

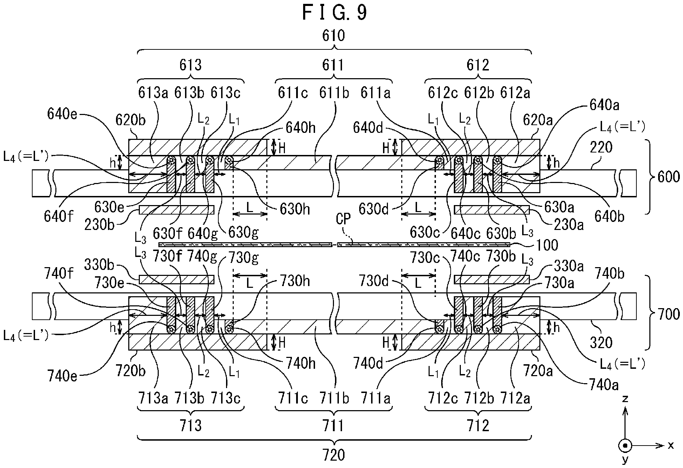

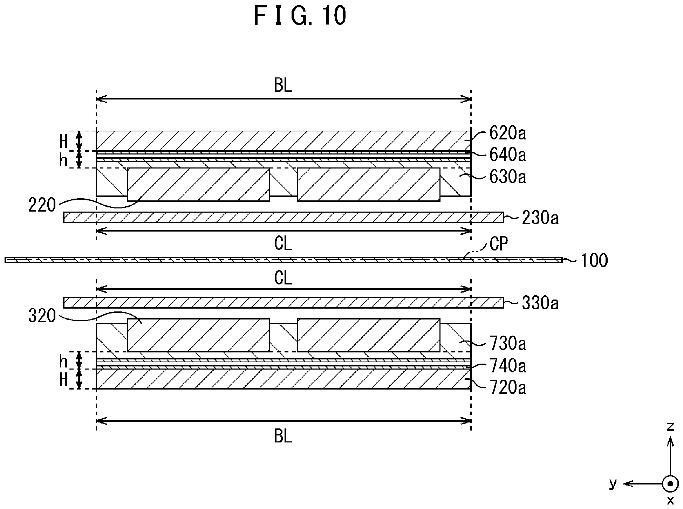

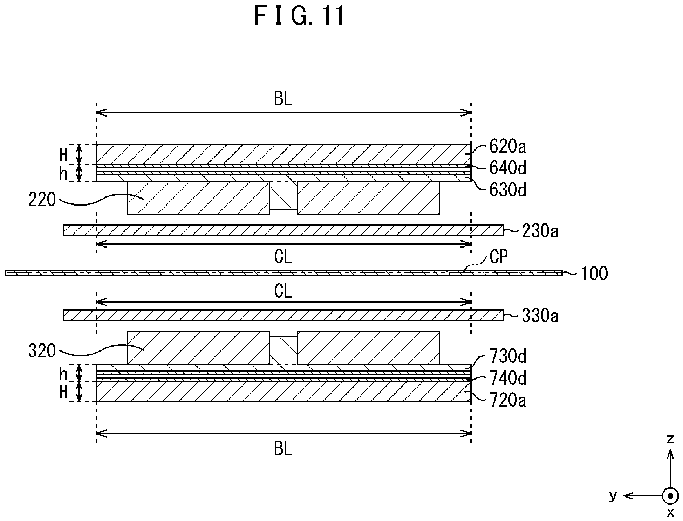

Fig. 8 is a view illustrating one example of a first cross section of the induction heating device. Concretely, Fig. 8 is a sectional view taken along I-I in Fig. 7. Fig. 9 is a view illustrating one example of a second cross section of the induction heating device. Concretely, Fig. 9 is a sectional view taken along II-II in Fig. 7. Fig. 10 is a view illustrating one example of a third cross section of the induction heating device. Concretely, Fig. 10 is a sectional view taken along III-III in Fig. 7. Fig. 11 is a view illustrating one example of a fourth cross section of the induction heating device. Concretely, Fig. 11 is a sectional view taken along IV-IV in Fig. 7.

In Fig. 8 and Fig. 9, the upper inductor 600 includes an upper core 610, bridge cores 620a to 620b, a coil 220, shield plates 230a to 230b, cooling fins 630a to 630h, and cooling small pipes 640a to 640h.

The upper core 610 is formed by using a ferromagnet. As illustrated in Fig. 8 and Fig. 9, the upper core 610 has a non-edge core 611, and two edge cores 612 to 613.

The edge cores 612, 613 are arranged on both sides of the non-edge core 611 in the x-axis direction. Similarly to the first embodiment, the present embodiment also exemplifies a case where a position in the x-axis direction of the non-edge core 611 includes a center position in the x-axis direction of the upper core 610.

Further, similarly to the first embodiment, the present embodiment also exemplifies a case where the non-edge core 611 and the two edge cores 612 to 613 are integrated. Therefore, there are no boundary lines between the non-edge core 611 and the edge cores 612 to 613.

The non-edge core 611 has a plurality of partial non-edge cores 611a to 611c arranged in a state of having an interval therebetween in the x-axis direction. Further, the edge cores 612, 613 have a plurality of partial edge cores 612a to 612c, 613a to 613c, respectively, arranged in a state of having an interval therebetween in the x-axis direction.

Here, a state where two partial edge cores have an interval therebetween does not mean only a state in which the two partial edge cores are not physically in contact with each other. For example, even if the two partial edge cores are partially in contact with each other, there may be created a state where a magnetic flux density in each partial edge core is reduced (a state where the magnetic flux density is reduced by 50% or more or reduced by 80% or more, or the like, for example), when compared to a case where a ferromagnet of a material same as that of the partial core exists between the two partial cores, due to insufficient magnetic coupling of the two partial edge cores. Such a state can also be regarded as a state where the two partial edge cores have an interval therebetween. Specifically, even in such a state, by using the later-described bridge core, the magnetic flux density in the partial edge core can be recovered to one nearly equal to the magnetic flux density in the main core.

The present embodiment exemplifies a case where the partial non-edge cores 611a to 611c are formed by a plurality of electromagnetic steel sheets laminated in the x-axis direction and whose thickness and planar shape are the same as those of the electromagnetic steel sheets forming the non-edge core 211 of the first embodiment. Further, a case is exemplified in which the partial edge cores 612a to 612c, 613a to 613c are formed by a plurality of electromagnetic steel sheets laminated in the x-axis direction and whose thickness and planar shape are the same as those of the electromagnetic steel sheets forming the edge cores 212, 213 of the first embodiment. Therefore, a y-z cross section of the partial non-edge cores 611a to 611c is the same as a y-z cross section of the non-edge core 211 illustrated in Fig. 4. Therefore, each of the partial non-edge cores 611a to 611c has a center leg portion and a body portion similar to the center leg portions 2111, 3111, and the body portions 2112, 3112 provided to the non-edge core 211. Further, a y-z cross section of the partial edge cores 612a to 612c, 613a to 613c is the same as a y-z cross section of the edge core 212 illustrated in Fig. 5. Therefore, each of the partial edge cores 612a to 612c, 613a to 613c has a center leg portion, an upstream-side leg portion, a downstream-side leg portion, and a body portion similar to the center leg portion 2121, the upstream-side leg portion 2122, the downstream-side leg portion 2123, and the body portion 2124 provided to the edge core 212.

The plurality of electromagnetic steel sheets forming each of the partial non-edge cores 611a to 611c are fixed so as not to be separated from each other. Further, the plurality of electromagnetic steel sheets forming each of the partial edge cores 612a to 612c, 613a to 613c are also fixed so as not to be separated from each other. A method of fixing the plurality of electromagnetic steel sheets is unlimited. For example, publicly-known various methods such as fixing with an adhesive, fixing by welding, fixing by caulking, and fixing using a fixing member, are employed as the method of fixing the plurality of electromagnetic steel sheets. Note that for the convenience of notation, an illustration of boundary lines of individual electromagnetic steel sheets is omitted in Fig. 8 and Fig. 9.

In Fig. 8 and Fig. 9, the cooling fins 630a, 630b, 630c, 630d are arranged between the partial edge cores 612a and 612b, between the partial edge cores 612b and 612c, between the partial edge core 612c and the partial non-edge core 611a, and between the partial non-edge cores 611a and 611b, respectively. In like manner, the cooling fins 630e, 630f, 630g, 630h are arranged between the partial edge cores 613a and 613b, between the partial edge cores 613b and 613c, between the partial edge core 613c and the partial non-edge core 611c, and between the partial non-edge cores 611c and 611b, respectively. Note that the present embodiment exemplifies a case where the intervals between these are fixed (not changed). However, the intervals between these may be changeable. Further, lengths in the x-axis direction of the respective partial edge cores 612a to 612c, 613a to 613c may be the same or different from each other.

Each of the cooling fins 630a to 630h is one example of a cooling member for cooling the partial non-edge cores 611a to 611c, and the partial edge cores 612a to 612c, 613a to 613c. The present embodiment exemplifies a case where the cooling fins 630a to 630h are fin-shaped non-magnetic conductor plates. The cooling fins 630a to 630h are formed by copper plates, for example.

Onto the cooling fins 630a to 630h, the cooling small pipes 640a to 640h are attached. Each of the cooling small pipes 640a to 640h is one example of a cooling member for cooling the partial non-edge cores 611a to 611c, the partial edge cores 612a to 612c, 613a to 613c, and the bridge cores 620a, 620b. The present embodiment exemplifies a case where the cooling small pipes 640a to 640h are non-magnetic conductor pipes.

The cooling fins 630a to 630h, and the cooling small pipes 640a to 640h attached onto the cooling fins are in contact with each other. Further, in Fig. 10, a case is exemplified in which an outer shape of the entire y-z cross section of a region combining the cooling fins 630a to 630c, 630e to 630g, and the cooling small pipes 640a to 640c, 640e to 640g, is the same as an outer shape of the y-z cross section of the edge core 212 illustrated in Fig. 5. Specifically, in Fig. 10, a case is exemplified in which a shape and a size of the entire region of the cooling fin 630a and the cooling small pipe 640a are the same as a shape and a size of a region of the edge core 212 in Fig. 5. Note that the y-z cross section of the partial edge cores 612a to 612c, 613a to 613c is the same as the y-z cross section of the edge core 212 illustrated in Fig. 5, as described above. Therefore, an outer shape of the entire y-z cross section of the region combining the cooling fins 630a to 630c, 630e to 630g, and the cooling small pipes 640a to 640c, 640e to 640g, is the same as an outer shape of the y-z cross section of the partial edge cores 612a to 612c, 613a to 613c.

Further, in Fig. 11, a case is exemplified in which an outer shape of the entire y-z cross section of a region combining the cooling fins 630d, 630h, and the cooling small pipes 640d, 640h, is the same as an outer shape of the y-z cross section of the non-edge core 211 illustrated in Fig. 4.
Specifically, in Fig. 11, a case is exemplified in which a shape and a size of the entire region of the cooling fin 630d and the cooling small pipe 640d are the same as a shape and a size of a region of the non-edge core 211 in Fig. 4. Note that the y-z cross section of the partial non-edge cores 611a to 611c is the same as the y-z cross section of the non-edge core 211 illustrated in Fig. 4, as described above. Therefore, an outer shape of the entire y-z cross section of the region combining the cooling fins 630d, 630h, and the cooling small pipes 640d, 640h, is the same as an outer shape of the y-z cross section of the partial non-edge cores 611a to 611c.

As illustrated in Fig. 10 and Fig. 11, although the shape of the y-z cross section of the cooling fins 630a to 630c, 630e to 630g is the E-shape, the shape of the y-z cross section of the cooling fins 630d, 630h is the T-shape. The cooling fins 630a to 630c, 630e to 630g are different from the cooling fins 630d, 630h, in this point.

Into the cooling small pipes 640a to 640h, a cooling medium such as cooling water is supplied. The cooling medium performs heat conduction from the partial non-edge cores 611a to 611c, the partial edge cores 612a to 612c, 613a to 613c, and the like, via the cooling small pipes 640a to 640h and the cooling fins 630a to 630h. Therefore, the cooling of the partial non-edge cores 611a to 611c, the partial edge cores 612a to 612c, 613a to 613c, and the like is accelerated.

The present embodiment exemplifies a case where a shape and a size when the partial non-edge cores 611a to 611c, the cooling fins 630d, 630h, and the cooling small pipes 640d, 640d are combined as illustrated in Fig. 8 and Fig. 9, are the same as a shape and a size of the non-edge core 211 in the first embodiment. Further, a case is exemplified in which a shape and a size when the partial edge cores 612a to 612c, the cooling fins 630a to 630c, and the cooling small pipes 640a to 640c are combined as illustrated in Fig. 8 and Fig. 9, are the same as a shape and a size of the edge core 213 in the first embodiment. In like manner, a case is exemplified in which a shape and a size when the partial edge cores 613a to 613c, the cooling fins 630e to 630g, and the cooling small pipes 640e to 640g are combined as illustrated in Fig. 8 and Fig. 9, are the same as a shape and a size of the edge core 213 in the first embodiment. However, it is not necessarily designed as above.

By magnetic fields based on eddy currents flowing through the shield plates 230a, 230b, the temperature of the upper core 610 becomes the highest in the vicinity of an upper part of sheet center-side end portions of the shield plates 230a, 230b. Accordingly, in the present embodiment, a case is exemplified in which a position in the x-axis direction (x-coordinate) of the non-edge core 611 and positions in the x-axis direction of the edge cores 612, 613 are determined as follows.

Gap regions in the x-axis direction formed in the non-edge core 611 and the edge cores 612, 213 will be referred to as core gap regions. The present embodiment exemplifies a case where the core gap regions are regions in which the cooling fins 630a to 630h and the cooling small pipes 640a to 640h are arranged. In the present embodiment, a case is exemplified in which the positions in the x-axis direction of the partial non-edge cores 611a to 611c, and the positions in the x-axis direction of the partial edge cores 612a to 612c, 613a to 613c are determined so that when the shield plates 230a, 230b are moved, within the movable ranges thereof in the x-axis direction, to positions closest to the center position in the x-axis direction of the induction heating device, sheet center-side end portions of the core gap regions on the most sheet center side out of the core gap regions that exist at positions facing the bridge cores 620a, 620b are arranged on the inner side (sheet center side) relative to the sheet center-side end portions of the shield plates 230a, 230b. In Fig. 8 and Fig. 9, a case is exemplified in which the sheet center-side end portions of the core gap regions on the most sheet center side out of the core gap regions that exist at the positions facing the bridge cores 620a, 620b, are sheet center-side end portions of the cooling fins 630d, 630h, respectively.

The positions in the x-axis direction of the partial non-edge cores 611a to 611c, and the positions in the x-axis direction of the partial edge cores 612a to 612c, 613a to 613c are determined as described above, which enables to make regions between the partial non-edge cores 611a to 611c, and the partial edge cores 612a to 612c, 613a to 613c to be positioned close to the above-described region where the temperature of the upper core 610 is high. Therefore, it is possible to reduce the temperature of the above-described region where the temperature of the upper core 610 becomes high. Further, when the cooling fins 630a to 630h and the cooling small pipes 640a to 640h are arranged in the regions between the partial non-edge cores 611a to 611c, and the partial edge cores 612a to 612c, 613a to 613c, as in the present embodiment, it is possible to further reduce the temperature of the above-described region where the temperature of the upper core 610 becomes high.

For example, in Fig. 8 and Fig. 9, the positions in the x-axis direction of the partial non-edge cores 611a to 611c, and the positions in the x-axis direction of the partial edge cores 612a to 612c, 613a to 613c are determined so that when the shield plate 230a is moved to the most x-axis negative direction side within the movable range thereof, the end portion on the x-axis negative direction side of the cooling fin 630d is positioned on the x-axis negative direction side relative to the end portion on the x-axis negative direction side of the shield plate 230a. Note that similarly to Fig. 2 and Fig. 3, Fig. 8 and Fig. 9 also illustrate a state in which the shield plates 230a, 230b are moved, within their movable ranges in the x-axis direction, to the positions closest to the center position in the x-axis direction of the induction heating device.

The bridge cores 620a, 620b are ferromagnets capable of being magnetically coupled to at least one core out of the partial non-edge cores 611a to 611c, and the partial edge cores 612a to 612c, 613a to 613c. Note that at least one core out of the partial non-edge cores 611a to 611c, and the partial edge cores 612a to 612c, 613a to 613c, indicates only one or more partial non-edge cores, only the partial edge core, or only one or more partial non-edge cores and one or more partial edge cores.

Here, when two cores can be magnetically coupled, this means that when the alternating currents flow through the coils provided to the induction heating device and by which the two cores are excited, the two cores are magnetically coupled. When the alternating currents do not flow through the coils provided to the induction heating device, the two cores are not magnetically coupled. When two cores are magnetically coupled, this means that a spin-spin coupling between a constituent atom of one core out of the two cores and a constituent atom of the other core is produced. In order to briefly check whether two cores are magnetically coupled or not, it is possible to regard that the two cores are magnetically coupled in the following case. Specifically, when a ratio of a magnetic flux density of a core, out of the two cores, with a lower density of magnetic flux generated in the core to a magnetic flux density of a core with a higher density of magnetic flux generated in the core is 0.2 or more, it is possible to regard that the two cores are magnetically coupled. The ratio is a design objective of the device, which is decided by a designer when designing the induction heating device. The ratio may be set to 0.2 as described above, but may also be set to 0.3 or more, 0.4 or more, 0.5 or more, or 0.6 or more, according to need.

The bridge cores 620a, 620b are required to be arranged on the back side of the partial non-edge cores 611a to 611c, and the back side of the partial edge cores 612a to 612c, 613a to 613c. Reasons thereof will be explained below.

Even if the bridge cores 620a, 620b are arranged on the partial non-edge cores 611a to 611c, and the partial edge cores 612a to 612c, 613a to 613c on the side where the planned conveyance plane CP exists, the bridge cores 620a, 620b, and the partial non-edge cores 611a to 611c and the partial edge cores 612a to 612c, 613a to 613c can be magnetically coupled. However, if the bridge cores 620a, 620b, and the partial non-edge cores 611a to 611c and the partial edge cores 612a to 612c, 613a to 613c are arranged in a manner as above, at least a part of the magnetic flux that should penetrate the band-shaped steel sheet 100, penetrates the bridge cores 620a, 620b. Consequently, the band-shaped steel sheet 100 cannot be heated sufficiently. Further, if the bridge cores 620a, 620b are arranged on side surfaces (side surfaces on the upstream side or the downstream side, or side surfaces in the x-axis direction) of the partial non-edge cores 611a to 611c, and side surfaces (side surfaces on the upstream side or the downstream side, or side surfaces in the x-axis direction) of the partial edge cores 612a to 612c, 613a to 613c, the degree of magnetic coupling between the bridge cores 620a, 620b, and the partial non-edge cores 611a to 611c and the partial edge cores 612a to 612c, 613a to 613c, becomes relatively smaller. As a result of this, the effect of recovering the magnetic flux density in the partial non-edge cores 611a, 611c and the partial edge cores 612a to 612c, 613a to 613c, which is reduced due to the separation of the partial non-edge cores 611a, 611c and the partial edge cores 612a to 612c, 613a to 613c in the x-axis direction, to one nearly equal to the magnetic flux density in the partial non-edge core 611b with the use of the bridge cores 620a, 620b, also becomes smaller. Besides, if the bridge cores 620a, 620b are arranged on the side surfaces of the partial non-edge cores 611a to 611c and the side surfaces of the partial edge cores 612a to 612c, 613a to 613c, at least a part of the magnetic flux that should penetrate the band-shaped steel sheet 100 penetrates the bridge cores 620a, 620b. Consequently, it is sometimes impossible to sufficiently heat the band-shaped steel sheet 100, or a temperature gradient is likely to be generated in the band-shaped steel sheet 100 in the width direction (the x-axis direction) in some cases.

From the above, the bridge cores 620a, 620b are required to be arranged on the back side of the partial non-edge cores 611a to 611c, and the back side of the partial edge cores 612a to 612c, 613a to 613c.

The present embodiment exemplifies a case where the bridge cores 620a, 620b contain soft magnetic ferrite being one example of ferromagnet having isotropy on magnetization direction. Further, the present embodiment exemplifies a case where the bridge core 620a can be magnetically coupled to the partial non-edge cores 611a to 611b and the partial edge cores 612a to 612c, and the bridge core 620b can be magnetically coupled to the partial non-edge cores 611b, 611c and the partial edge cores 613a to 613c. In this case, the partial non-edge core 611a and the partial edge cores 612a to 612c, and the partial non-edge core 611c and the partial edge cores 613a to 613c, can also be magnetically coupled via the bridge cores 620a, 620 and the partial non-edge core 611b. Specifically, all parts forming the upper core 610 (the partial non-edge cores 611a to 611c, and the partial edge cores 612a to 612c, 613a to 613c) can be magnetically coupled via the bridge cores 620a, 620b.

Since the partial non-edge cores 611a to 611c, and the partial edge cores 612a to 612c, 613a to 613c are magnetically coupled via the bridge cores 620a, 620b, an inductance of the induction heating device that includes the bridge cores 620a, 620b, becomes larger than an inductance of the induction heating device that does not include the bridge cores 620a, 620b. As described above, the bridge cores 620a, 620b, the partial non-edge cores 611a to 611b, and the edge cores 612a to 612c, 613a to 613c can be magnetically coupled.

When the bridge cores 620a, 620b do not exist, the partial non-edge cores 611a to 611c, and the partial edge cores 612a to 612c, 613a to 613c are sectioned by the regions between the partial non-edge cores 611a to 611c, and the partial edge cores 612a to 612c, 613a to 613c (in the present embodiment, the cooling fins 630a to 630h). Therefore, the magnetic flux density in each of the partial edge cores 612a to 612c, 613a to 613c becomes smaller. On the contrary, in the present embodiment, such a small magnetic flux density can be increased by using the bridge cores 620a, 620b. For example, by using the bridge cores 620a, 620b, the magnetic flux density in each of the partial edge cores 612a to 612c, 613a to 613c can be recovered to one nearly equal to the magnetic flux density in the partial non-edge cores 611a to 611b. For example, the magnetic flux density in each of the partial edge cores 612a to 612c, 613a to 613c is preferably 0.75 times or more the magnetic flux density in the non-edge cores 611a to 611b, and more preferably 0.9 times or more the magnetic flux density in the non-edge cores 611a to 611b. However, the partial edge cores 612a to 612c, 613a to 613c, and the partial non-edge cores 611a to 611b are only required to be magnetically coupled, as described above.

As illustrated in Fig. 8 and Fig. 9, the bridge cores 620a, 620b are arranged on both sides in the x-axis direction in a state of having an interval therebetween. Further, Fig. 8 and Fig. 9 exemplify a case where, when seen from the z-axis direction, the bridge cores 620a, 620b are arranged so as to be overlapped with a part of the non-edge core 611. Further, Fig. 8 and Fig. 9 exemplify a case where, when seen from the z-axis direction, the bridge cores 620a, 620b are respectively arranged so as to be overlapped with at least a part of the partial edge cores 612a to 612c, 613a to 613c, respectively.

Here, one example of the arrangement of the bridge cores 620a, 620b in the present embodiment will be explained more concretely while referring to Fig. 8 and Fig. 9. An end surface on the planned conveyance plane CP side (lower surface) of the bridge core 620a is in contact with a part on the back side (upper surface) of the partial non-edge core 611b, an entire end surface on the back side (upper surface) of the partial non-edge core 611a arranged on the x-axis positive direction side (one side) of the partial non-edge core 611b, all of end surfaces on the back side (upper surfaces) of the partial edge cores 612a to 612c, and end portions on the back side (upper end portions) of the cooling small pipes 640a to 640d. Further, an end surface on the planned conveyance plane CP side (lower surface) of the bridge core 620b is in contact with a part of an end surface on the back side (upper surface) of the partial non-edge core 611b, an entire end surface on the back side (upper surface) of the partial non-edge core 611c arranged on the x-axis negative direction side (the other side) of the partial non-edge core 611b, all of end surfaces on the back side (upper surfaces) of the partial edge cores 613a to 613c, and end portions on the back side (upper end portions) of the cooling small pipes 640e to 640h.

However, if the bridge cores 620a, 620b, and the partial non-edge cores 611a to 611c and the partial edge cores 612a to 612c, 613a to 613c can be magnetically coupled, it is possible that there is no contact between the bridge cores 620a, 620b, and the non-edge core 611, the edge cores 612, 613, and the cooling small pipes 640a to 640h. For example, the bridge cores 620a, 620b may be arranged in a state of having an interval with respect to the partial non-edge cores 611a to 611c and the partial edge cores 612a to 612c, 613a to 613c. Further, the bridge cores 620a, 620b may be in contact with or face while having an interval with respect to only either of the non-edge core 611 and the edge cores 612, 613. Further, the bridge cores 620a, 620b may be in contact with or face while having an interval with respect to a part of region of at least one partial edge core out of the partial edge cores 612a to 612c, 613a to 613c.

The bridge cores 620a, 620b are preferably arranged as follows.

In Fig. 8 and Fig. 9, sheet center-side lapped lengths L of the bridge cores 620a, 620b are lengths in the x-axis direction of portions where the non-edge core 611 and the edge cores 612, 613, and the bridge cores 620a, 620b are overlapped, in a region on the sheet center side relative to the core gap regions on the most sheet center side out of the core gap regions that exist at positions facing the bridge cores 620a, 620b, when seen from the z-axis direction. Fig. 8 and Fig. 9 exemplify a case where the region on the sheet center side relative to the core gap regions on the most sheet center side out of the core gap regions that exist at the positions facing the bridge cores 620a, 620b, corresponds to a region of the partial non-edge core 611b.

The sheet center-side lapped length L of each of the bridge cores 620a, 620b is preferably set to a length α or more, and is more preferably a length β or more. This is because the magnetic coupling between the partial edge cores 612a to 612c, 613a to 613c, and the partial non-edge cores 611a to 611c via the bridge cores 620a, 620b can be securely realized.

For example, in Fig. 8 and Fig. 9, it is preferable that the end portion on the x-axis negative direction side of the bridge core 620a is arranged at a position on the x-axis negative direction side relative to the end portion on the x-axis negative direction side of the cooling fin 630d, so that the lapped length L of the bridge core 620a becomes the length α or more. Further, it is more preferable that the end portion on the x-axis negative direction side of the bridge core 620a is arranged at a position on the x-axis negative direction side relative to the end portion on the x-axis negative direction side of the cooling fin 630d, so that the lapped length L of the bridge core 620a becomes the length β or more.

The length α and the length β can be obtained from results of publicly-known electromagnetic field analysis (numerical analysis) using mathematical expressions, a finite element method, and the like, for example. However, it is also possible to simply determine the length α and the length β in the following manner. Specifically, a minimum value of lengths in the x-axis direction of the cores except for the partial non-edge core 611b that is arranged on the most sheet center side, out of the partial non-edge cores 611a to 611c and the partial edge cores 612a to 612c (namely, the partial non-edge cores 611a, 611c and the partial edge cores 612a to 612c, 613a to 613c) may be set to the length α, and a maximum value of the lengths may be set to the length β. In Fig. 8 and Fig. 9, the cores overlapped with the bridge core 620a when seen from the z-axis direction are the partial non-edge cores 611a to 611b and the partial edge cores 612a to 612c. A minimum value of lengths L₁ to L₄ in the x-axis direction of the partial non-edge core 611a and the partial edge cores 612a to 612c as a result of excluding the partial non-edge core 611b that is arranged on the most sheet center side, from the partial non-edge cores 611a to 611b and the partial edge cores 612a to 612c, is the length L₃ (= L₂ = L₁) in the x-axis direction of the partial non-edge core 611a and the partial edge cores 612b to 612c, and a maximum value of the lengths is the length L₄ in the x-axis direction of the partial edge core 612a. Therefore, the sheet center-side lapped length L of the bridge core 620a is preferably set to equal to or more than the minimum value of the lengths L₁ to L₄ in the x-axis direction of the partial non-edge core 611a and the partial edge cores 612a to 612c (namely, the length L₃ (= L₂ = L₁) in the x-axis direction of the partial non-edge core 611a and the partial edge cores 612b to 612c), and more preferably set to equal to or more than the maximum value of the lengths L₁ to L₄ in the x-axis direction of the partial non-edge core 611a and the partial edge cores 612a to 612c (namely, the length L₄ in the x-axis direction of the partial edge core 612a). In like manner, the sheet center-side lapped length L of the bridge core 620b is preferably set to equal to or more than the minimum value of the lengths L₁ to L₄ in the x-axis direction of the partial non-edge core 611c and the partial edge cores 613a to 613c (namely, the length L₃ (= L₂ = L₁) in the x-axis direction of the partial non-edge core 611c and the partial edge cores 613b to 613c), and more preferably set to equal to or more than the maximum value of the lengths in the x-axis direction of the partial non-edge core 611c and the partial edge cores 613a to 613c (namely, the length L₄ in the x-axis direction of the partial edge core 613a).

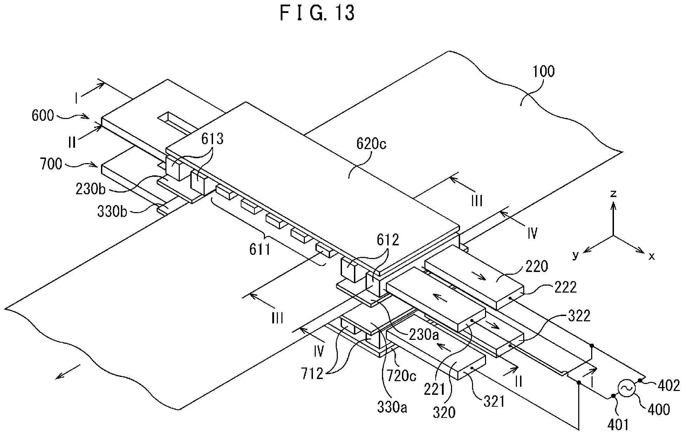

The length α is a length to be a lower limit of a preferable range of the sheet center-side lapped lengths L of the bridge cores 620a, 620b, and the like. As a method of simply determining the length α, it has been already described that the minimum value of the lengths in the x-axis direction of the cores except for the partial non-edge core 611a (namely, the partial non-edge cores 611b to 611c and the partial edge cores 612a to 612c, 613a to 613c) may be set to α. However, the length in the x-axis direction of the partial non-edge core 611a is larger than the length in the x-axis direction of the partial non-edge cores 611b to 611c and the partial edge cores 612a to 612c, 613a to 613c, so that in a case of simply determining the length α, there is no need to exclude the partial non-edge core 611a. Accordingly, in a case of simply determining the length α in an embodiment as in Fig. 13 to be described later, a minimum value of lengths in the x-axis direction of partial cores separated in the x-axis direction (namely, partial non-edge cores 611d to 611e and partial edge cores 612a to 612c, 613a to 613c in Fig. 13) may be set to α.

On the other hand, an upper limit value of the sheet center-side lapped length L of each of the bridge cores 620a, 620b is not required to be defined in particular.

Further, in Fig. 8 and Fig. 9, sheet end-side lapped lengths L' of the bridge cores 620a, 620b are lengths in the x-axis direction of overlapped portions between the partial edge cores 612a, 613a arranged on the most sheet end side out of the partial non-edge cores 611a to 611c and the partial edge cores 612a to 212c, 613a to 613c, and the bridge cores 620a, 620b, when seen from the z-axis direction. The sheet end-side lapped length L' of each of the bridge cores 620a, 620b is preferably set to the length α or more. The sheet end-side lapped length L' of each of the bridge cores 620a, 620b may also be the length β or more, for example.

Further, there is no need to prevent the end portion on the sheet end side of the bridge core 620a or 620b from protruding toward the sheet end side (outer side) relative to the end portion on the sheet end side of the partial edge core 612a or 613a. However, basically, there is no necessity for the end portion on the sheet end side of the bridge core 620a or 620b to protrude toward the sheet end side (outer side) relative to the end portion on the sheet end side of the partial edge core 612a or 613a. This is because an effect of improving the magnetic flux density of cores obtained by the portion protruded toward the sheet end side (an effect of recovering the magnetic flux density in the partial non-edge cores 611a, 611c and the partial edge cores 612a to 612c, 613a to 613c, which is reduced due to the separation of the partial non-edge cores 611a, 611c and the partial edge cores 612a to 612c, 613a to 613c in the x-axis direction, to one nearly equal to the magnetic flux density in the partial non-edge core 611b with the use of the bridge cores 620a, 620d) is relatively small. Here, the sheet end side is the opposite side of the sheet center side. The end portion on the sheet end side of the bridge core 620a and the end portion on the sheet end side of the edge core 612a are end portions on the x-axis positive direction side. The end portion on the sheet end side of the bridge core 620b and the end portion on the sheet end side of the edge core 613b are end portions on the x-axis negative direction side. On the x-axis positive direction side relative to the center in the x-axis direction of the induction heating device, the sheet end side is the x-axis positive direction side. On the other hand, on the x-axis negative direction side relative to the center in the x-axis direction of the induction heating device, the sheet end side is the x-axis negative direction side.

Further, a height (length in the z-axis direction) H of the bridge cores 620a, 620b is preferably 0.5 times or more a smaller length out of lengths h and α (equal to or more than a smaller value out of 0.5 × h and 0.5 × α). This is because the magnetic coupling between the partial edge cores 612a to 612c, 613a to 613dc, and the partial non-edge cores 611a to 611c via the bridge cores 620a, 620b can be securely realized. Further, a thickness (length in the z-axis direction) H of the bridge cores 620a, 620b is more preferably 1.0 time or more a smaller length out of the lengths h and α (equal to or more than a smaller value out of h and α). This is because the partial edge cores 612a to 612c, 613a to 613dc, and the partial non-edge cores 611a to 611c are magnetically coupled more firmly via the bridge cores 620a, 620b. Although an upper limit of the thickness (length in the z-axis direction) H of the bridge cores 620a, 620b is not required to be defined in particular, it may be set to 2.0 times a larger length out of the lengths h and α (a larger value out of 2.0 × h and 2.0 × α) or 1.0 time a smaller length out of the lengths h and α (a smaller value out of h and α).

Here, as illustrated in Fig. 8 to Fig. 11, the length h is a length in the z-axis direction of a region of the partial non-edge cores 611a to 611c and the partial edge cores 612a to 212c, 613a to 613c, on the back side of the coil 220 arranged in the partial non-edge cores 611a to 611c and the partial edge cores 612a to 212c, 613a to 613c.

Further, a ratio of a length BL in the y-axis direction of the bridge cores 620a, 620b to a length CL in the y-axis direction of the partial non-edge cores 611a to 611c and the partial edge cores 612a to 212c, 613a to 613c (= BL / CL) is preferably 0.2 or more. This is because the magnetic coupling between the partial edge cores 612a to 212c, 613a to 613c, and the partial non-edge cores 611a to 611c via the bridge cores 620a, 620b can be securely realized. Further, from a viewpoint of making the partial edge cores 612a to 212c, 613a to 613c, and the partial non-edge cores 611a to 611c to be magnetically coupled firmly via the bridge cores 620a, 620b, the ratio of the length BL in the y-axis direction of the partial non-edge cores 611a to 611c and the partial edge cores 612a to 212c, 613a to 613c (= BL / CL) is preferably greater than 0.5, or 0.6 or more. Although an upper limit of the ratio (= BL / CL) is not required to be defined in particular, it may be set to 1.0 or 0.8.

Further, positions in the y-axis direction of upstream-side end portions of the partial non-edge cores 611a to 611c and the partial edge cores 612a to 212c, 613a to 613c may match positions in the y-axis direction of upstream-side (y-axis negative direction side) end portions of the bridge cores 620a, 620b. Further, the upstream-side end portions of the partial non-edge cores 611a to 611c and the partial edge cores 612a to 212c, 613a to 613c are preferably positioned on the upstream side of the upstream-side end portions of the bridge cores 620a, 620b, or the positions thereof are preferably the same. The upstream-side end portions of the partial non-edge cores 611a to 611c and the partial edge cores 612a to 212c, 613a to 613c may be positioned on the upstream side of the upstream-side end portions of the bridge cores 620a, 620b. However, the effect of improving the magnetic flux density of cores (the effect of recovering the magnetic flux density in the partial non-edge cores 611a, 611c and the partial edge cores 612a to 612c, 613a to 613c, which is reduced due to the separation of the partial non-edge cores 611a, 611c and the partial edge cores 612a to 212c, 613a to 613c in the x-axis direction, to one nearly equal to the magnetic flux density in the partial non-edge core 611b with the use of the bridge cores 620a, 620b) is relatively small. Accordingly, there is no necessity for the upstream-side end portions of the bridge cores 620a, 620b to protrude toward the upstream side relative to the upstream-side end portions of the partial non-edge cores 611a to 611c and the partial edge cores 612a to 212c, 613a to 613c. In like manner, positions in the y-axis direction of downstream-side (y-axis positive direction side) end portions of the partial non-edge cores 611a to 611c and the partial edge cores 612a to 212c, 613a to 613c may match positions in the y-axis direction of downstream-side end portions of the bridge cores 620a, 620b. Further, the downstream-side end portions of the partial non-edge cores 611a to 611c and the partial edge cores 612a to 612c, 613a to 613c may be positioned on the downstream side of the downstream-side end portions of the bridge cores 620a, 620b. The downstream-side end portions of the partial non-edge cores 611a to 611c and the partial edge cores 612a to 612c, 613a to 613c may be positioned on the upstream side of the downstream-side end portions of the bridge cores 620a, 620b. However, the effect of improving the magnetic flux density of cores (the effect of recovering the magnetic flux density in the partial non-edge cores 611a, 611c and the partial edge cores 612a to 612c, 613a to 613c, which is reduced due to the separation of the partial non-edge cores 611a, 611c and the partial edge cores 612a to 212c, 613a to 613c in the x-axis direction, to one nearly equal to the magnetic flux density in the partial non-edge core 611b with the use of the bridge cores 620a, 620b) is relatively small. Accordingly, there is no necessity for the downstream-side end portions of the bridge cores 620a, 620b to protrude toward the downstream side relative to the downstream-side end portions of the partial non-edge cores 611a to 611c and the partial edge cores 612a to 212c, 613a to 613c.

Further, when the upstream-side end portions of the bridge cores 620a, 620b are not positioned on the upstream side of the upstream-side end portions of the partial non-edge cores 611a to 611c and the partial edge cores 612a to 212c, 613a to 613c, and the downstream-side end portions of the bridge cores 620a, 620b are not positioned on the downstream side of the downstream-side end portions of the partial non-edge cores 611a to 611c and the partial edge cores 612a to 212c, 613a to 613c, center positions in the y-axis direction of the bridge cores 620a, 620b, and center positions in the y-axis direction of the partial non-edge cores 611a to 611c and the partial edge cores 612a to 212c, 613a to 613c may match.

There is no need to prevent the bridge cores 620a, 620b from protruding outward relative to a region connecting end portions on both sides in the x-axis direction (sheet end-side end portions) and end portions on both sides of the upstream side and the downstream side in the y-axis direction of the partial non-edge cores 611a to 611c and the partial edge cores 612a to 212c, 613a to 613c, when the induction heating device is seen from the z-axis direction. However, basically, there is no necessity for the bridge cores 620a, 620b to protrude outward relative to the region connecting these end portions. This is because the effect of improving the magnetic flux density of cores obtained by the protruding portions of the bridge cores 620a, 620b (the effect of recovering the magnetic flux density in the partial non-edge cores 611a, 611c and the partial edge cores 612a to 612c, 613a to 613c, which is reduced due to the separation of the partial non-edge cores 611a, 611c and the partial edge cores 612a to 612c, 613a to 613c in the x-axis direction, to one nearly equal to the magnetic flux density in the partial non-edge core 611b with the use of the bridge cores 620a, 620d) is relatively small.

Note that values themselves of the lengths of the respective parts of the induction heating device including the lengths h, L₁ to L₄, BL, and CL are determined as follows, for example. Specifically, under a plurality of conditions with different values of lengths of the respective parts of the induction heating device, a simulation test that simulates performance of induction heating of the band-shaped steel sheet 100 or electromagnetic field analysis is performed in the induction heating device. Subsequently, from, out of results of the simulation test or the electromagnetic field analysis, results capable of obtaining a desired temperature distribution as a temperature distribution in the x-axis direction of the band-shaped steel sheet 100, values of lengths of the respective parts of the induction heating device are decided. Note that when the induction heating device includes a part whose length is restricted due to an installation space or the like, the value of the length of the part is determined to meet the restriction. For example, the size, the shape, and the position of the bridge cores 620a, 620b are decided so as not to influence on movement of the other members such as the coil 220, and the shield plates 240a, 240b.

As described above, the present embodiment exemplifies a case where the bridge cores 620a, 620b are cores separate from the upper core 610 (the non-edge core 611 and the edge cores 612, 613). Therefore, the bridge cores 620a, 620b have boundary lines at boundaries with the upper core 610 (the non-edge core 611 and the edge cores 612, 613), as illustrated in Fig. 7 to Fig. 9.

Note that in above explanation, the positions of the respective parts except for the shield plates 240a, 240b, out of the respective parts of the upper inductor 600, are preferably fixed.

Similarly to the upper inductor 600, the lower inductor 700 also includes a lower core 710 including a non-edge core 711 (partial non-edge cores 711a to 711c) and edge cores 712 to 713 (partial edge cores 712a to 712c, 713a to 713c), bridge cores 720a, 720b, a coil 320, shield plates 330a to 330b, cooling fins 730a to 730h, and cooling small pipes 740a to 740h, and has a configuration same as that of the upper inductor 600. The present embodiment exemplifies a case where the cores arranged by a set for each coil forming the pair of coils are formed by the upper core 610 and the lower core 710. Further, the present embodiment exemplifies a case where the cores forming the set of cores have the upper core 610 and the lower core 710.

As described above, in the present embodiment, by using the bridge cores 620a, 620b, 720a, 720b, a range of a main magnetic flux and an amount of the main magnetic flux passing through the partial non-edge cores 611a to 611c, 711a to 711c, and the partial edge cores 612a to 612c, 613a to 613c, 712a to 712c, 713a to 713c can be increased more than those of a case where the bridge cores 620a, 620b, 720a, 720b are not provided. Therefore, the partial non-edge cores 611a to 611c and the partial edge cores 612a to 612c, 613a to 613c, and the partial non-edge cores 711a to 711c and the partial edge cores 712a to 712c, 713a to 713c, respectively, can be magnetically coupled efficiently.

As described above, the non-edge core 611 and the edge cores 612, 613 (the partial non-edge cores 611a to 611c and the partial edge cores 612a to 612c, 613a to 613c) can be magnetically coupled by the bridge cores 620a, 620b. Therefore, between the partial non-edge cores 611a to 611c and the partial edge cores 612a to 612c, 613a to 613c, and the bridge cores 620a, 620b, the magnetic coupling (spin-spin coupling) of three members of the partial non-edge cores 611a to 611c, the partial edge cores 612a to 612c, 613a to 613c, and the bridge cores 620a, 620b can be increased. Consequently, the magnetic flux density in the partial non-edge cores 611a to 611c and the magnetic flux density in the partial edge cores 612a to 612c, 613a to 613c can be increased more than those of a case where the bridge cores 620a, 620b are not provided. The above is similarly applied also to the lower inductor 300.

Note that in Patent Literature 6, the screen 14 is formed by a conductor. The magnetic pad 16 is arranged on the armature 15 that supports the screen 14. Therefore, even if the magnetic pad 16 is a ferromagnet, the screen 14 (conductor) exists between the magnetic bars 8 and the magnetic pad 16. Accordingly, the magnetic bars 8 and the magnetic pad 16 are not magnetically coupled. Namely, the magnetic pad 16 does not function as the bridge core explained in the present embodiment. Further, the magnetic pad 16 is not positioned on the back side of the core, and thus it does not function as the bridge core explained in the present embodiment.

Further, the armature 12 is used for positioning the magnetic bar 8, and is not a core that is magnetically coupled to the magnetic bar 8. Even if the armature 12 is a ferromagnet, a thickness of the armature 12 is small, so that a magnetic resistance of the armature 12 is quite high. Specifically, if the main magnetic flux passing through the magnetic bar 8 is going to pass through the armature 12, the armature 12 causes magnetic saturation and thus it is equivalent to a non-magnetic substance. As described above, even if the armature 12 is the ferromagnet, it becomes equivalent to the non-magnetic substance, and thus is not magnetically coupled to the magnetic bar 8. Namely, the armature 12 does not function as the bridge core explained in the present embodiment. Further, the armature 12 is not positioned on the back side of the core, and thus it does not function as the bridge core explained in the present embodiment.

Further, in the technique of Patent Literature 6, the plurality of magnetic bars 8 are arranged in a state of having an interval therebetween. Accordingly, an alternating magnetic field increased by the plurality of magnetic bars 8 leaks from regions between the plurality of magnetic bars 8 to be diffused to the periphery. There is a possibility that a peripheral object (an electronic device, for example) is heated by the alternating magnetic field diffused from the plurality of magnetic bars 8. Further, there is a possibility that a noise is generated in the peripheral object due to the alternating magnetic field diffused from the plurality of magnetic bars 8. Further, there is a possibility that the band-shaped steel sheet 100 is heated unintentionally by the alternating magnetic field diffused from the plurality of magnetic bars 8. In this case, the temperature distribution in the x-axis direction of the band-shaped steel sheet 100 may be nonuniform. Conditions regarding a place in which the induction heating device is installed are not the same, so that it is substantially impossible to predict whether or not the band-shaped steel sheet 100 is heated unintentionally. If total power of the induction heating device is increased due to the unintentional heating of the band-shaped steel sheet 100, a reduction in total heating efficiency of the induction heating device may be caused. In this case, it may be required to reconsider the method of power supply with respect to the induction heating device for heating the band-shaped steel sheet 100 to a desired temperature.

On the contrary, in the present embodiment, the partial non-edge cores 611a to 611c and the partial edge cores 612a to 612c, 613a to 613c can be magnetically coupled by the bridge cores 620a, 620b. Therefore, the diffusion of the alternating magnetic field increased by the cores (the partial non-edge cores 611a to 611c and the partial edge cores 612a to 612c, 613a to 613) to the periphery can be suppressed. Consequently, the above-described various adverse effects can be suppressed.

Further, in the present embodiment, the bridge cores 620a, 620b are formed of soft magnetic ferrite (a ferromagnet having isotropy on magnetization direction). Therefore, the coupling of mutual spins of constituent atoms between the partial non-edge cores 611a to 611c and the partial edge cores 612a to 612c, 613a to 613c, and the bridge cores 620a, 620b can be further accelerated. Therefore, the magnetic flux density in the non-edge core 611 and the edge cores 612 to 613 can be increased.

Further, in the present embodiment, by using the cooling fins 630a to 630h, and the cooling small pipes 640a to 640h, it is possible to suppress the increase in temperatures of the partial non-edge cores 611a to 611c and the increase in temperatures of the partial edge cores 612a to 612c, 613a to 613c.

Further, in the present embodiment, the bridge cores 620a, 620b are the cores separate from the upper core 610. Therefore, it is possible to make it easy to perform an assembling work and a maintenance work of the induction heating device. Further, the same bridge cores 620a, 620b can be applied to an induction heating device with different specification (for example, an induction heating device with different number of partial non-edge cores and/or partial edge cores), as long as its entire shape and size are the same as those of the induction heating device described above.

The above is similarly applied also to the lower inductor 700.

### <Modified example>

The present embodiment exemplified the case where the bridge cores 620a, 620b are formed of soft magnetic ferrite. However, the soft magnetic material that forms the bridge cores 620a, 620b is unlimited to soft magnetic ferrite. For example, the bridge cores 620a, 620b may also be formed by a plurality of electromagnetic steel sheets laminated in the z-axis direction, each having a planar shape same as a shape of a surface parallel to the x-y plane of the bridge cores 620a, 620b (a rectangular shape in the example of the present embodiment). Further, the bridge cores 620a, 620b may also be formed by a plurality of electromagnetic steel sheets laminated in the x-axis direction, each having a planar shape same as a shape of a surface parallel to the y-z plane of the bridge cores 620a, 620b.

Further, the present embodiment exemplified the case where the number of the cooling fins 630a to 630h and the number of the cooling small pipes 640a to 640h are eight, respectively. However, the number of these is unlimited to eight. Further, the intervals between the cooling fins 630a and 630h, and the intervals between the cooling small pipes 640a and 640h are not necessarily the same, respectively. By increasing the number of the cooling fins 630a to 630h and the cooling small pipes 640a to 640h arranged in the region of the non-edge core 611 (between the partial non-edge cores 611a and 611c), the regions of the edge cores 612, 613 (between the partial edge cores 612a and 612c, 613a and 613c), and the regions between the non-edge core 611 and the edge cores 612, 613 (between the partial non-edge core 611a and the partial edge core 612c, and between the partial non-edge core 611c and the partial edge core 612c), the cooling effect of the non-edge core 611 and the edge cores 612, 613 is enhanced. Specifically, the number of the cooling fins 630a to 630h and the number of the cooling small pipes 640a to 640h are unlimited to the numbers illustrated in Fig. 7 to Fig. 9, and are appropriately decided in accordance with a temperature required of the induction heating device.

Further, the present embodiment exemplified the case where the number of the bridge cores 620a, 620b provided to the upper inductor 600 is two. However, the number of the bridge cores provided to the upper inductor 600 is unlimited to two. The number of the bridge core provided to the upper inductor 600 may be one, or three or more.

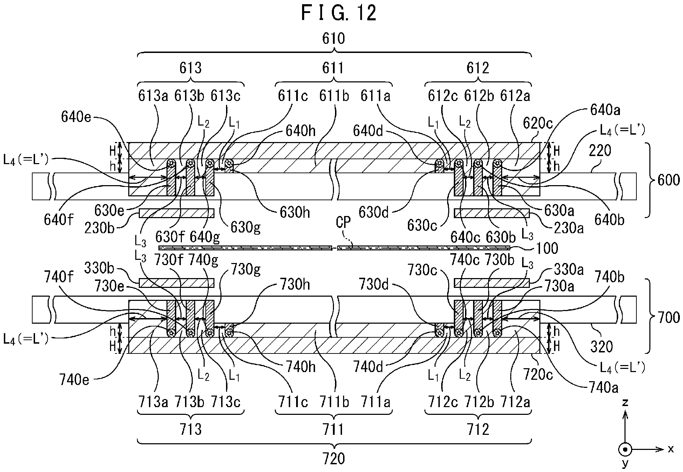

For example, as illustrated in Fig. 12, one bridge core 620c may be arranged so that at least a part of region of an end surface on the back side (upper surface) of each of the partial non-edge cores 611a to 611c, and at least a part of region of each of end surfaces on the back side (upper surfaces) of the partial edge cores 612a to 612c, 613a to 613c, face at least a part of region of an end surface on the planned conveyance plane CP side (lower surface) of the bridge core 620c. Also in the lower inductor 700, one bridge core 720c may be arranged so that at least a part of region of an end surface on the back side (lower surface) of each of the partial non-edge cores 711a to 711c, and at least a part of region of each of end surfaces on the back side (lower surfaces) of the partial edge cores 712a to 712c, 713a to 713c, face at least a part of region of an end surface on the planned conveyance plane CP side (upper surface) of the bridge core 720c.

Note that Fig. 12 is a view corresponding to Fig. 9. Fig. 12 exemplifies a case where the end surface on the planned conveyance plane CP side (lower surface) of the bridge core 620c is in contact with the entire region of the end surfaces on the back side (upper surfaces) of the partial non-edge cores 611a to 611c, and the entire region of the end surfaces on the back side (upper surfaces) of the partial edge cores 612a to 612c, 613a to 613c. In like manner, Fig. 12 exemplifies a case where the end surface on the planned conveyance plane CP side (upper surface) of the bridge core 720c is in contact with the entire region of the end surfaces on the back side (lower surfaces) of the partial non-edge cores 711a to 711c, and the entire region of the end surfaces on the back side (lower surfaces) of the partial edge cores 712a to 712c, 713a to 713c. As long as the bridge core 620c can be magnetically coupled to the partial non-edge cores 611a to 611c and the partial edge cores 612a to 612c, 613a to 613c, and the bridge core 720c can be magnetically coupled to the partial non-edge cores 711a to 711c and the partial edge cores 712a to 712c, 713a to 713c, the bridge cores 620c, 720c are not necessarily in contact with these partial non-edge cores, as described above.

Further, the present embodiment exemplified the case where, when the shield plates 230a, 230b are moved, within the movable ranges thereof in the x-axis direction, to the positions closest to the center position in the x-axis direction of the induction heating device, the sheet center-side end portions of the core gap regions on the most sheet center side out of the core gap regions that exist at the positions facing the bridge cores 620a, 620b (the sheet center-side end portions of the cooling fins 630d, 630h, in the example illustrated in Fig. 8 and Fig. 9) are arranged on the inner side (sheet center side) relative to the sheet center-side end portions of the shield plates 230a, 230b. However, the positional relation between the shield plates 230a, 230b, and the non-edge core 611 and the edge cores 612, 613 when the shield plates 230a, 230b are moved, within the movable ranges thereof in the x-axis direction, to the positions closest to the center position in the x-axis direction of the induction heating device, is unlimited to such a relation.

For example, when the shield plates 230a, 230b are moved, within the movable ranges thereof in the x-axis direction, to the positions closest to the center position in the x-axis direction of the induction heating device, the sheet center-side end portion of at least one partial edge core of the partial edge cores 612a to 612c and the sheet center-side end portion of at least one partial edge core of the partial edge cores 613a to 613c may be arranged on the inner side (sheet center side) relative to the sheet center-side end portions of the shield plates 230a, 230b, respectively. For example, the partial edge cores 612a to 612c, 613a to 613c may be arranged on the inner side (sheet center side) relative to the sheet center-side end portions of the shield plates 230a, 230b, respectively.

When the shield plates 230a, 230b are moved, within the movable ranges thereof in the x-axis direction, to the positions closest to the center position in the x-axis direction of the induction heating device, the sheet center-side end portion of at least one of the cooling fins 630a to 630d and the sheet center-side end portion of at least one of the cooling fins 630e to 630h may be arranged on the inner side (sheet center side) relative to the sheet center-side end portions of the shield plates 230a, 230b, respectively.

For example, when the shield plates 230a, 230b are moved, within the movable ranges thereof in the x-axis direction, to the positions closest to the center position in the x-axis direction of the induction heating device, the sheet center-side end portions of the cooling fins 630d, 630h may be arranged on the inner side (sheet center side) relative to the sheet center-side end portions of the shield plates 230a, 230b, respectively. Further, the sheet center-side end portions of the cooling fins 630a to 630d, 630e to 630h may be arranged on the inner side (sheet center side) relative to the sheet center-side end portions of the shield plates 230a, 230b, respectively. Further, the sheet center-side end portions of the cooling fins 630b to 630d, 630f to 630h may be arranged on the inner side (sheet center side) relative to the sheet center-side end portions of the shield plates 230a, 230b, respectively. Further, when the shield plates 230a, 230b are moved, within the movable ranges thereof in the x-axis direction, to the positions closest to the center position in the x-axis direction of the induction heating device, the sheet center-side end portion of at least one of the cooling fins 630a to 630d and the sheet center-side end portion of at least one of the cooling fins 630e to 630h may be arranged on the outer side (sheet end side) relative to the sheet center-side end portions of the shield plates 240a, 240b, respectively.

Further, the cooling members arranged between the partial non-edge cores 611a and 611c, the cooling members arranged between the partial edge cores 612a and 612c, 613a and 613c, and the cooling members arranged between the partial edge cores 612c, 613c and the partial non-edge cores 611a, 611c, respectively, are not necessarily the cooling fins 630a to 630h and the cooling small pipes 640a to 640h, as long as non-magnetic conductors configured to be able to perform cooling are used. For example, a pipe with hollow rectangular parallelepiped shape formed by a non-magnetic conductor may be arranged in a region where the cooling fins 630a to 630h and the cooling small pipes 640a to 640h are arranged. In such a case, cooling water may be supplied to a hollow portion of the pipe.

Further, the cooling members may not be arranged in the regions between the partial non-edge cores 611a and 611c, the regions between the partial edge cores 612a and 612c, 613a and 613c, and the regions between the partial edge cores 612c, 613c and the partial non-edge cores 611a, 611c, respectively. The regions between the partial non-edge cores 611a and 611c, the regions between the partial edge cores 612a and 612c, 613a and 613c, and the regions between the partial edge cores 612c, 613c and the partial non-edge cores 611a, 611c, respectively, may also be voids. In such a case, a cooling gas may be supplied, as a cooling medium, to the voids. Further, a length in the x-axis direction of the region of the voids may be increased to be longer than the length illustrated in Fig. 8 and Fig. 9, to thereby enhance a cooling effect through air cooling.

Note that the number of partial non-edge cores is only required to be two or more, and is unlimited. However, it is preferable that all of the partial non-edge cores can be magnetically coupled to at least one of bridge core. Further, it is more preferable that all of the partial non-edge cores can be magnetically coupled to each other. Further, shapes and sizes of the plurality of partial non-edge cores are unlimited. The shapes and the sizes of the plurality of partial non-edge cores may be the same or different. Regarding the plurality of partial edge cores as well, the shapes and the sizes thereof may be the same or different.

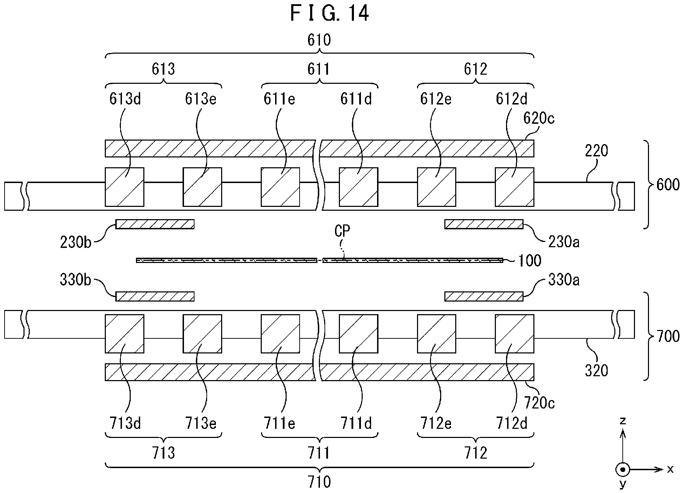

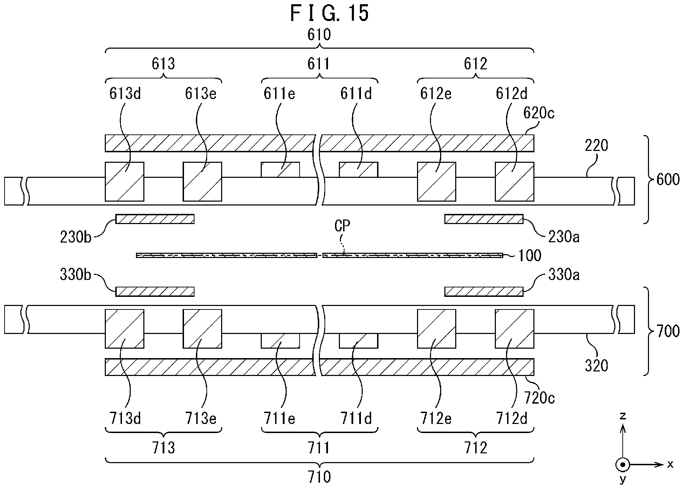

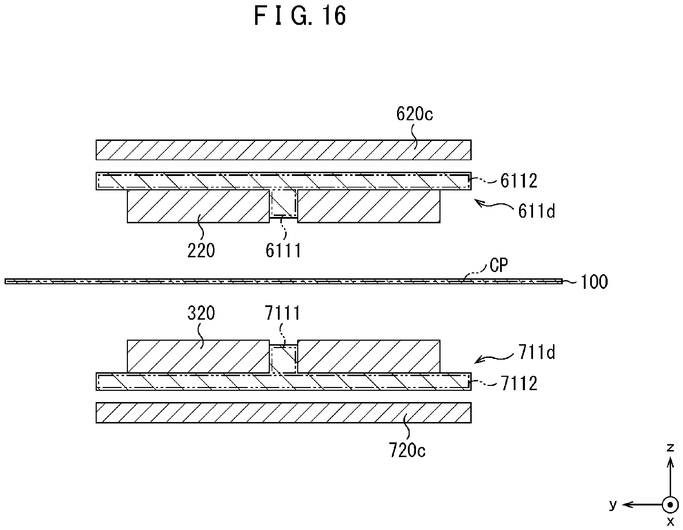

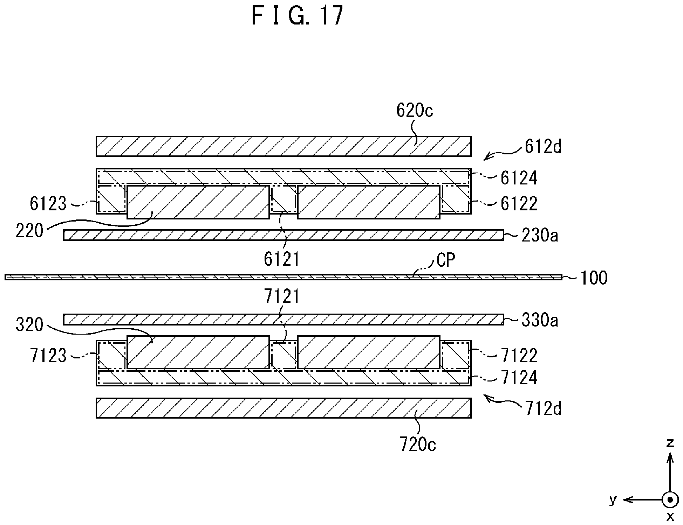

For example, the induction heating device may also be configured as illustrated in Fig. 13 to Fig. 17. Fig. 13 is a view illustrating one example of an external configuration of the induction heating device. Fig. 13 is a view corresponding to Fig. 7. Fig. 14 is a view illustrating one example of a first cross section of the induction heating device. Concretely, Fig. 14 is a sectional view taken along I-I in Fig. 13, and is a view corresponding to Fig. 8. Fig. 15 is a view illustrating one example of a second cross section of the induction heating device. Concretely, Fig. 15 is a sectional view taken along II-II in Fig. 13, and is a view corresponding to Fig. 9. Fig. 16 is a view illustrating one example of a third cross section of the induction heating device. Concretely, Fig. 16 is a sectional view taken along III-III in Fig. 13. Fig. 17 is a view illustrating one example of a fourth cross section of the induction heating device. Concretely, Fig. 17 is a sectional view taken along IV-IV in Fig. 13.

In Fig. 13 to Fig. 17, an upper inductor 600 includes an upper core 610, a bridge core 620c, a coil 220, and shield plates 230a, 230b.

In the example illustrated in Fig. 13 to Fig. 17, a non-edge core 611 has a plurality of partial non-edge cores 611d to 611e arranged in a state of having an interval therebetween in the x-axis direction. Further, edge cores 612, 613 have a plurality of partial edge cores 612d to 612e, 613d to 613e, respectively, arranged in a state of having an interval therebetween in the x-axis direction.

A point of difference between the partial non-edge cores 611d to 611e, and the partial non-edge cores 611a to 611c illustrated in Fig. 8 and Fig. 9, is only the length in the x-axis direction. The non-edge cores 611d to 611e are formed by a plurality of electromagnetic steel sheets laminated in the x-axis direction, each having the same thickness and the same planar shape, for example. In such a case, the number of laminating of the electromagnetic steel sheets forming the partial non-edge cores 611d to 611e, and the number of laminating of the electromagnetic steel sheets forming the partial non-edge cores 611a to 611c, are different. Further, in the example illustrated in Fig. 13, when the partial non-edge cores 611d to 611e are formed by a plurality of electromagnetic steel sheets each having the same thickness and the same planar shape, the number of laminating of the electromagnetic steel sheets in each of the cores is the same.

As illustrated in Fig. 16, a y-z cross section of the partial non-edge cores 611d to 611e is the same as the y-z cross section of the non-edge core 211 illustrated in Fig. 4. Further, as illustrated in Fig. 16, the partial non-edge cores 611d to 611e have a center leg portion 6111 and a body portion 6112. A point of difference between the center leg portion 6111 provided to the partial non-edge cores 611d to 611e and the center leg portion 2111 provided to the partial non-edge cores 611a to 611c, is only the length in the x-axis direction. In like manner, a point of difference between the body portion 6112 provided to the partial non-edge cores 611d to 611e and the body portion 2112 provided to the partial non-edge cores 611a to 611c, is only the length in the x-axis direction. Note that as described above, one example of the center leg portion 2111 and the body portion 2112 provided to the partial non-edge cores 611a to 611c is illustrated in Fig. 4. Further, Fig. 12 to Fig. 16 exemplify a case where shapes and sizes of the plurality of partial non-edge cores 611d to 611e are the same.

A point of difference between the partial edge cores 612d to 612e, 613d to 613e, and the partial edge cores 612a to 612c, 613a to 613c illustrated in Fig. 8 and Fig. 9, is only the length in the x-axis direction. The partial edge cores 612d to 612e, 613d to 613e are formed by a plurality of electromagnetic steel sheets laminated in the x-axis direction, each having the same thickness and the same planar shape, for example. In such a case, the number of laminating of the electromagnetic steel sheets forming the partial edge cores 612d to 612e, 613d to 613e, and the number of laminating of the electromagnetic steel sheets forming the partial edge cores 612a to 612c, 613a to 613c, are different. Further, in the example illustrated in Fig. 13, when the partial edge cores 612d to 612e are formed by a plurality of electromagnetic steel sheets each having the same thickness and the same planar shape, the number of laminating of the electromagnetic steel sheets in each of the cores is the same.

As illustrated in Fig. 17, a y-z cross section of the partial edge cores 612d to 612e, 613d to 613e is the same as the y-z cross section of the edge core 212 illustrated in Fig. 5. Further, as illustrated in Fig. 17, the partial edge cores 612d to 612e have a center leg portion 6121, an upstream-side leg portion 6122, a downstream-side leg portion 6123, and a body portion 6124. A point of difference between the center leg portion 6121, the upstream-side leg portion 6122, and the downstream-side leg portion 6123 provided to the partial edge cores 612d to 612e, and the center leg portion 2121, the upstream-side leg portion 2122, and the downstream-side leg portion 2123 provided to the partial edge cores 612a to 612c, respectively, is only the length in the x-axis direction. In like manner, a point of difference between the body portion 6124 provided to the partial edge cores 612d to 612e and the body portion 2124 provided to the partial edge cores 612a to 612c, is only the length in the x-axis direction. Note that as described above, one example of the center leg portion 2121, the upstream-side leg portion 2122, the downstream-side leg portion 2123, and the body portion 2124 provided to the partial edge cores 612a to 612c is illustrated in Fig. 5. Further, Fig. 12 to Fig. 15, and Fig. 17 exemplify a case where shapes and sizes of the plurality of partial edge cores 612d to 612e, 613d to 613e are the same.

Further, Fig. 13 to Fig. 17 exemplify a case where the lengths and the intervals in the x-axis direction of all of the partial non-edge cores 611d to 611e and all of the partial edge cores 612d to 612e, 613d to 613e are the same.

The bridge core 620c is a ferromagnet for enabling at least one core out of the partial non-edge cores 611d to 611e and the partial edge cores 612d to 612e, 613d to 613e to be magnetically coupled thereto. Note that the bridge core 620c itself is the same as the bridge core 620c illustrated in Fig. 12. Fig. 13 to Fig. 17 exemplify a case where an end surface on the planned conveyance plane CP side (lower surface) of the bridge core 620c, and all of end surfaces on the back side (upper surfaces) of all of the partial non-edge cores 611d to 611e and all of end surfaces on the back side (upper surfaces) of all of the partial edge cores 612d to 612e, 613d to 613e face in a state of having an interval therebetween. The interval between the bridge core 620c, and the partial non-edge cores 611d to 611e and the partial edge cores 612d to 612e, 613d to 613e is determined so that the bridge core 620c can be magnetically coupled to at least one core of the partial non-edge cores 611d to 611e.

Similarly to the upper inductor 600, a lower inductor 700 includes a lower core 710 having a non-edge core 711 (partial non-edge cores 711d to 711e) and two edge cores 712, 713 (partial edge cores 712d to 712d, 713e to 713e), a bridge core 720c, a coil 320, and shield plates 330a, 330b, and has a configuration same as that of the upper inductor 600. Therefore, as illustrated in Fig. 16, the partial non-edge cores 711d to 711e have a center leg portion 7111 and a body portion 7112. Further, as illustrated in Fig. 17, the partial edge cores 712d to 712e have a center leg portion 7121, an upstream-side leg portion 7122, a downstream-side leg portion 7123, and 7124.

Note that in Fig. 13 to Fig. 17, cooling members (a cooling fin and a cooling small pipe, for example) may be arranged between the two partial non-edge cores adjacent in a state of having an interval therebetween in the x-axis direction, between the two partial edge cores adjacent in a state of having an interval therebetween in the x-axis direction, and between the partial non-edge core and the partial edge core adjacent in a state of having an interval therebetween in the x-axis direction, as explained in the present embodiment. The other configurations such that the upper core 610 and the bridge core 620c, and the lower core 710 and the bridge core 720c may also be in contact with each other, are also applicable, as explained in the present embodiment.

Other than the above, the various modified examples explained in the first embodiment may be applied to the induction heating device of the present embodiment. Further, a modified example combining at least two of the above-described respective modified examples including the modified examples explained in the first embodiment, may be applied to the induction heating device of the present embodiment.

Note that the above-described respective modified examples may be applied to the lower inductor 700.

### (Third embodiment)

Next, a third embodiment of the present invention will be described. The second embodiment exemplified the case where the upper core 610 (the non-edge core 611 and the edge cores 612, 613) and the bridge cores 620a, 620b are the separate cores. In like manner, the case was exemplified in which the lower core 710 (the non-edge core 711 and the edge cores 712, 713) and the bridge cores 720a, 720b are the separate cores. On the contrary, the present embodiment exemplifies a case where an upper core and bridge cores are integrated as one core, and a lower core and bridge cores are integrated as one core. As described above, the present embodiment and the first embodiment are different mainly in a core configuration. Therefore, in the explanation of the present embodiment, parts same as those of the first embodiment and the second embodiment are denoted by the same reference numerals as those given to Fig. 1 to Fig. 17, and a detailed explanation thereof will be omitted.

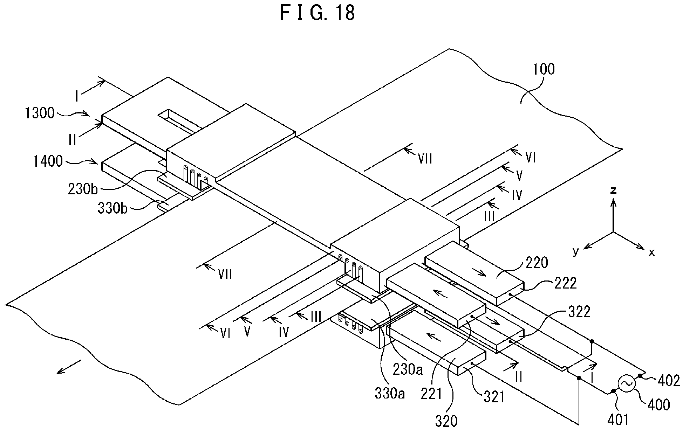

Fig. 18 is a view illustrating one example of an external configuration of an induction heating device. Fig. 18 is a view corresponding to Fig. 1 and Fig. 7.

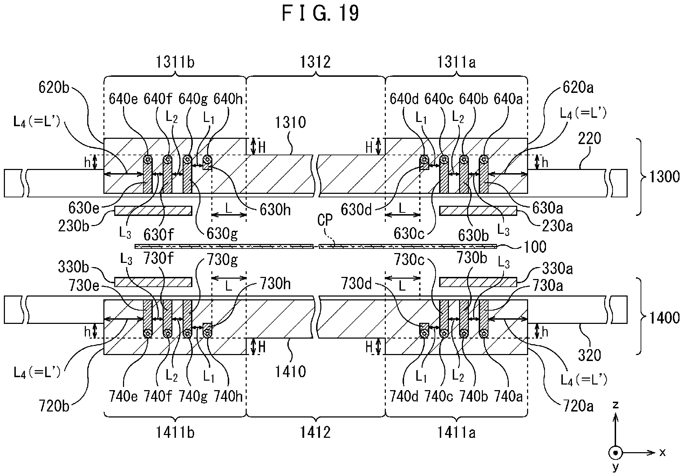

The induction heating device illustrated in Fig. 18 includes an upper inductor 1300 and a lower inductor 1400. The upper inductor 1300 and the lower inductor 1400 are arranged at positions facing each other with the planned conveyance plane CP of the band-shaped steel sheet 100 interposed therebetween (refer to Fig. 19 to Fig. 25). The upper inductor 1300 and the lower inductor 1400 have the same configuration. Therefore, the upper inductor 1300 will be explained here in detail, and a detailed explanation regarding the lower inductor 1400 will be omitted according to need. Note that an interval between the upper inductor 1300 and the planned conveyance plane CP and an interval between the lower inductor 1400 and the planned conveyance plane CP may be the same or different. Similarly to the first embodiment and the second embodiment, the present embodiment also exemplifies a case where the induction heating device has a shape in a relation of mirror symmetry in which a y-z plane at a center in the x-axis direction of the induction heating device is set to a plane of symmetry. Further, when an interval between the upper inductor 1300 and the band-shaped steel sheet 100 and an interval between the lower inductor 1400 and the band-shaped steel sheet 100 are the same, the induction heating device has a shape in a relation of mirror symmetry in which an x-y plane at a center in the z-axis direction of the induction heating device is set to a plane of symmetry.

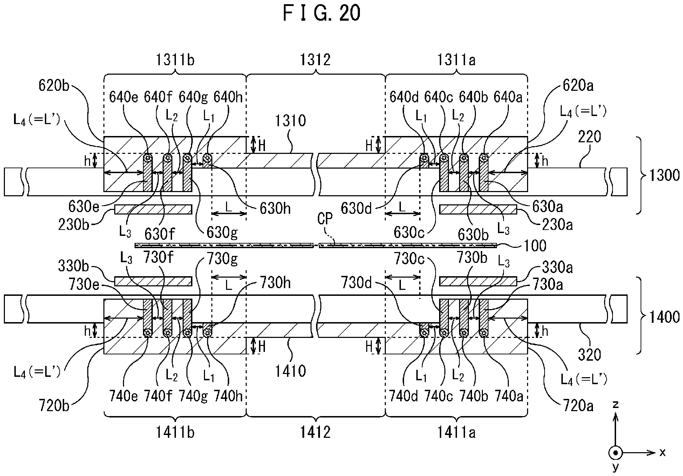

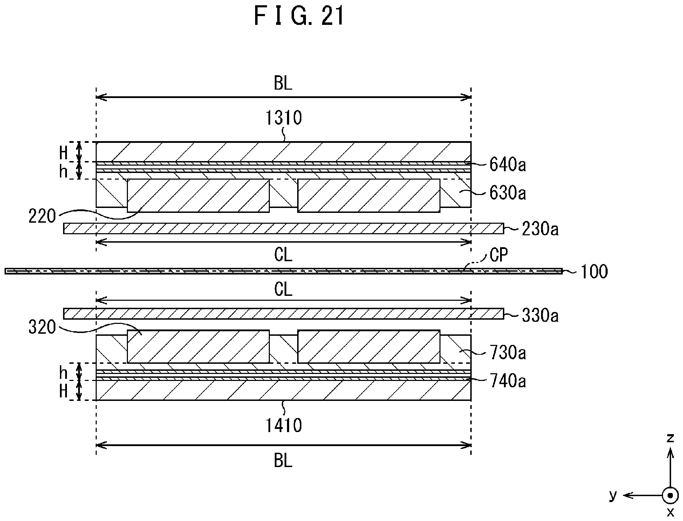

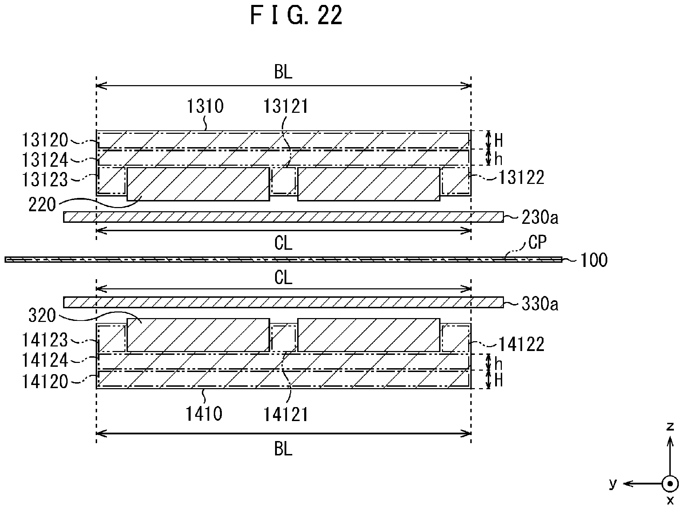

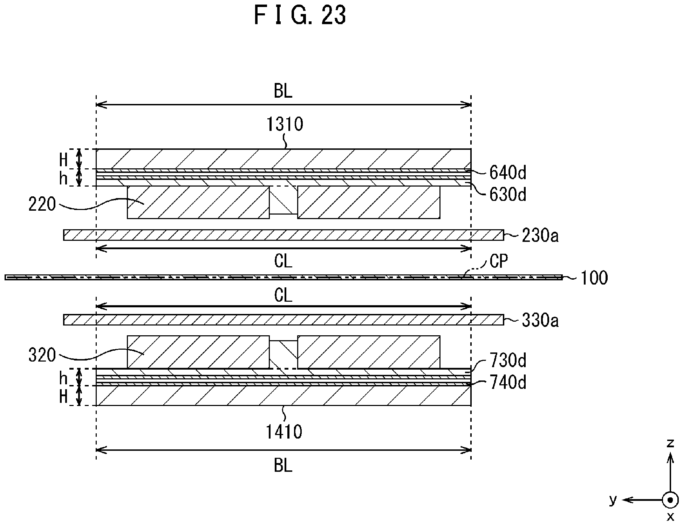

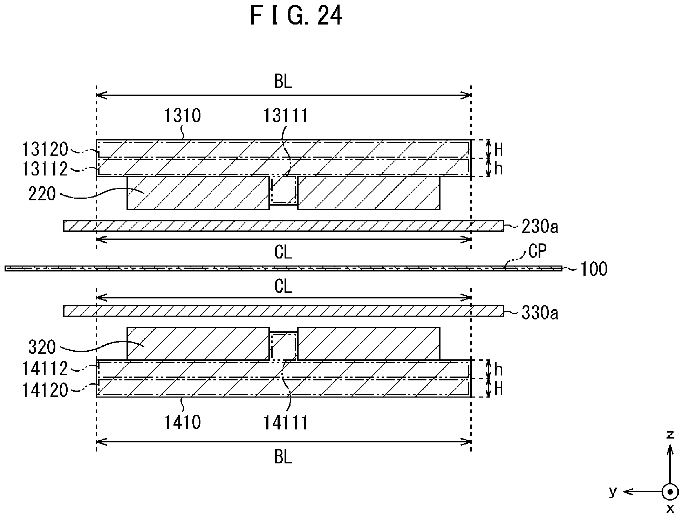

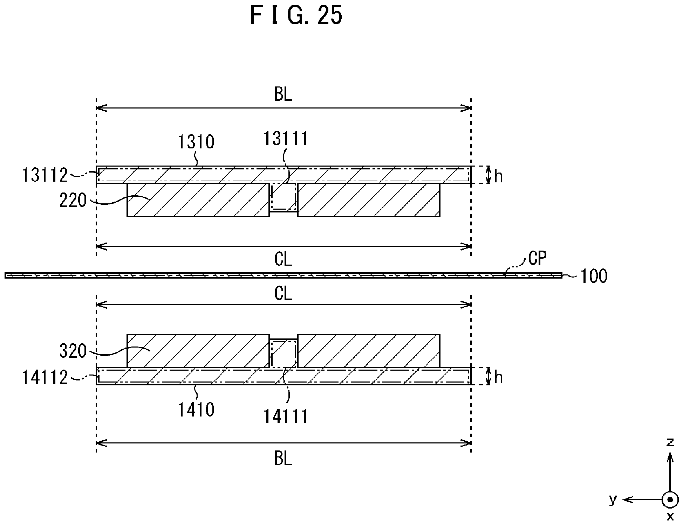

Fig. 19 is a view illustrating one example of a first cross section of the induction heating device. Concretely, Fig. 19 is a sectional view taken along I-I in Fig. 18, and is a view corresponding to Fig. 8. Fig. 20 is a view illustrating one example of a second cross section of the induction heating device. Concretely, Fig. 20 is a sectional view taken along II-II in Fig. 18, and is a view corresponding to Fig. 9. Fig. 21 is a view illustrating one example of a third cross section of the induction heating device. Concretely, Fig. 21 is a sectional view taken along III-III in Fig. 18, and is a view corresponding to Fig. 10. Fig. 22 is a view illustrating one example of a fourth cross section of the induction heating device. Concretely, Fig. 22 is a sectional view taken along IV-IV in Fig. 18. Fig. 23 is a view illustrating one example of a fifth cross section of the induction heating device. Concretely, Fig. 23 is a sectional view taken along V-V in Fig. 18, and is a view corresponding to Fig. 11. Fig. 24 is a view illustrating one example of a sixth cross section of the induction heating device. Concretely, Fig. 24 is a sectional view taken along VI-VI in Fig. 18. Fig. 25 is a view illustrating one example of a seventh cross section of the induction heating device. Concretely, Fig. 25 is a sectional view taken along VII-VII in Fig. 18.

In Fig. 18 to Fig. 20, the upper inductor 1300 includes an upper core 1310, a coil 220, shield plates 230a to 230b, cooling fins 630a to 630h, and cooling small pipes 640a to 640h.

The upper core 1310 is formed as one core in which the partial non-edge cores 611a to 611c, and the partial edge cores 612a to 612c, 613a to 613c explained in the second embodiment are integrated.

The present embodiment exemplifies a case where the upper core 1310 is formed by a plurality of electromagnetic steel sheets laminated in the x-axis direction, each having the same thickness.

In Fig. 19 to Fig. 20, regions 1311a, 1311b of the upper core 1310 are regions of the upper core 1310, including regions corresponding to the bridge cores 620a, 620b in the second embodiment. In the present embodiment, the planar shape of the electromagnetic steel sheets arranged in the regions 1311a, 1311b of the upper core 1310 is one of a region of the upper core 1310 illustrated in Fig. 21 to Fig. 25, for example.

As illustrated in Fig. 21, in the regions adjacent in the z-axis direction to the regions in which the cooling fins 630a to 630c, 630e to 630g, and the cooling small pipes 640a to 640c, 640e to 640g are arranged, in the regions 1311a, 1311b of the upper core 1310, electromagnetic steel sheets having a planar shape corresponding to the regions are laminated in the x-axis direction, for example. A y-z cross section of the regions is one like a y-z cross section of the upper core 1310 illustrated in Fig. 21, for example. Fig. 21 exemplifies a case where an outer shape of the entire y-z cross section of the regions is a rectangular shape. Further, Fig. 21 exemplifies a case where a length in the z-axis direction of the rectangular shape is the same as the length in the z-axis direction of the bridge cores 620a, 620b of the second embodiment. However, the length in the z-axis direction of the rectangular shape may be (slightly) different for each position in the x-axis direction according to a curvature of the cooling small pipes 640a to 640c, 640e to 640g, for example.

Further, as illustrated in Fig. 22, in the regions in which the partial edge cores 612a to 612c, 613a to 613c of the second embodiment are arranged, in the regions 1311a, 1311b of the upper core 1310, electromagnetic steel sheets having a planar shape corresponding to the regions are laminated in the x-axis direction, for example. A y-z cross section of the regions is one like a y-z cross section of the upper core 1310 illustrated in Fig. 22, for example. Fig. 22 exemplifies a case where an outer shape of the entire y-z cross section of the regions is an E-shape (note that all horizontal lines of E have the same length). Further, Fig. 22 exemplifies a case where a length in the z-axis direction of the regions (a length in a direction parallel to the horizontal line of E) is a length as a result of adding the length in the z-axis direction of the bridge cores 620a, 620b in the second embodiment and the length in the z-axis direction of the partial edge cores 612a to 612c, 613a to 613c in the second embodiment.

Fig. 22 illustrates one example of a region 13121, a region 13122, a region 13123, and a region 13124 corresponding to the regions corresponding to the center leg portion 2121, the upstream-side leg portion 2122, the downstream-side leg portion 2123, and the body portion 2124, respectively, provided to the partial edge core 612c of the second embodiment, and a region 13120 corresponding to the bridge core 620a of the second embodiment. In like manner, Fig. 22 illustrates one example of a region 14121, a region 14122, a region 14123, and a region 14124 corresponding to the regions corresponding to the center leg portion 3121, the upstream-side leg portion 3122, the downstream-side leg portion 3123, and the body portion 2124, respectively, provided to the partial edge core 712c of the second embodiment, and a region 14120 corresponding to the bridge core 720a of the second embodiment.

Further, as illustrated in Fig. 23, in the regions adjacent in the z-axis direction to the regions in which the cooling fins 630d, 630h, and the cooling small pipes 640d, 640h are arranged, in the regions 1311a, 1311b of the upper core 1310, electromagnetic steel sheets having a planar shape corresponding to the regions are laminated in the x-axis direction, for example. A y-z cross section of the regions is one like a y-z cross section of the upper core 1310 illustrated in Fig. 23, for example. Fig. 23 exemplifies a case where an outer shape of the entire y-z cross section of the regions is a rectangular shape. Fig. 23 exemplifies a case where a length in the z-axis direction of the rectangular shape is the same as the length in the z-axis direction of the bridge cores 620a, 620b of the second embodiment. However, the length in the z-axis direction of the rectangular shape may be (slightly) different for each position in the x-axis direction according to a curvature of the cooling small pipes 640d, 640h, for example.

Further, as illustrated in Fig. 24, in the regions in which the partial non-edge cores 611a to 611c in the second embodiment are arranged, in the regions 1311a, 1311b of the upper core 1310, electromagnetic steel sheets having a planar shape corresponding to the regions are laminated in the x-axis direction, for example. Each of the regions is a region of the upper core 1310 illustrated in Fig. 24, for example. Fig. 24 exemplifies a case where an outer shape of the entire y-z cross section of the regions is a T-shape. Fig. 24 exemplifies a case where a length in the z-axis direction of the regions (a length in a direction parallel to the vertical line of T) is a length as a result of adding the length in the z-axis direction of the bridge cores 620a, 620b in the second embodiment and the length in the z-axis direction of the partial edge cores 612a to 612c, 613a to 613c in the second embodiment.

Fig. 24 illustrates one example of a region 13111 and a region 13112 corresponding to the regions corresponding to the center leg portion 2111 and the body portion 2112, respectively, provided to the partial non-edge core 611b of the second embodiment, and a region 13120 corresponding to the bridge core 620a of the second embodiment. In like manner, Fig. 22 illustrates one example of a region 14111 and a region 14112 corresponding to the regions corresponding to the center leg portion 3111 and the body portion 3112, respectively, provided to the partial non-edge core 711b of the second embodiment, and a region 14120 corresponding to the bridge core 720a of the second embodiment.

On the other hand, in Fig. 19 to Fig. 20, the region 1312 of the upper core 1310 is a region of the upper core 1310 that does not include the regions corresponding to the bridge cores 620a, 620b in the second embodiment, in the z-axis direction. In the region 1312 of the upper core 1310, electromagnetic steel sheets having the same planar shape corresponding to the region 1312 are laminated in the x-axis direction, for example. A y-z cross section of the region 1312 of the upper core 1310 is one like a y-z cross section of the upper core 1310 illustrated in Fig. 25, for example. Fig. 25 exemplifies a case where an outer shape of the entire y-z cross section of the region 1312 of the upper core 1310 is a T-shape. Further, Fig. 25 exemplifies a case where a length in the z-axis direction of the region 1312 of the upper core 1310 (a length in a direction parallel to the vertical line of T) is the same as the length in the z-axis direction of the partial non-edge cores 611a to 611c in the second embodiment.

Fig. 25 illustrates one example of a region 13111 and a region 13112 corresponding to the regions corresponding to the center leg portion 2111 and the body portion 2112, respectively, provided to the partial non-edge core 611b of the second embodiment, and a region 13120 corresponding to the bridge core 620a of the second embodiment. In like manner, Fig. 22 illustrates one example of a region 14111 and a region 14112 corresponding to the regions corresponding to the center leg portion 3111 and the body portion 3112, respectively, provided to the partial non-edge core 711b of the second embodiment, and a region 14120 corresponding to the bridge core 720a of the second embodiment. Note that Fig. 24 is a y-z cross section of regions adjacent in the z-axis direction to the regions corresponding to the bridge cores 620a, 620b, in the region corresponding to the partial non-edge core 611b of the second embodiment. On the other hand, Fig. 25 is a y-z cross section of a region that is not adjacent in the z-axis direction to the regions corresponding to the bridge cores 620a, 620b, in the region corresponding to the partial non-edge core 611b of the second embodiment.

The plurality of electromagnetic steel sheets forming the upper core 1310 are fixed so as not to be separated from each other. A method of fixing the plurality of electromagnetic steel sheets is unlimited. For example, publicly-known various methods such as fixing with an adhesive, fixing by welding, fixing by caulking, and fixing using a fixing member, are employed as the method of fixing the plurality of electromagnetic steel sheets. As described above, in the present embodiment, the upper core (the non-edge core and the edge cores) and the bridge cores are integrated as one core. Therefore, as illustrated in Fig. 18 to Fig. 20, there are no boundary lines at boundaries between the bridge cores (the regions corresponding to the bridge cores 620a, 620b), and the non-edge core and the edge cores (the regions corresponding to the non-edge core 611 and the edge cores 612, 613). Note that for the convenience of notation, an illustration of boundary lines of individual electromagnetic steel sheets is omitted in Fig. 18 to Fig. 20.

The present embodiment exemplifies a case where the bridge cores are formed by the regions corresponding to the bridge cores 620a, 620b, 720a, 720b, in the regions of the upper core 1310 and the lower core 1410.

Similarly to the upper inductor 1300, the lower inductor 1400 also includes a lower core 1410, a coil 320, shield plates 330a, 330b, cooling fins 730a to 730h, and cooling small pipes 740a to 740h, and has a configuration same as that of the upper inductor 1300. Note that in Fig. 19 to Fig. 20, regions 1411a, 1411b of the lower core 1410 are regions including the regions corresponding to the bridge cores 720a, 720b of the second embodiment, in the region of the lower core 1410. On the other hand, in Fig. 19 to Fig. 20, a region 1412 of the lower core 1410 is a region that does not include the regions corresponding to the bridge cores 720a, 720b of the second embodiment, in the region of the lower core 1410.

As described above, in the present embodiment, the regions corresponding to the bridge cores 620a to 620b, and 720a to 720b are not separated from but integrated with the regions corresponding to the non-edge core 611 and the edge cores 612 to 613 and the regions corresponding to the non-edge core 711 and the edge cores 712 to 713, respectively.
Specifically, in the present embodiment, the non-edge core, the edge cores, and the bridge cores are formed as one core (one upper core 1310, and one lower core 1410). Also in such a case, the induction heating device exhibiting the effects explained in the first embodiment and the second embodiment is realized. Further, it is possible to further increase the coupling of mutual spins (spin-spin coupling) between the spin of constituent atoms of the regions corresponding to the bridge cores 620a, 620b, and the spin of constituent atoms of the regions corresponding to the non-edge core 611 and the edge cores 612, 613. This enables to increase a magnetic flux density generated in these regions by producing an alternating current flow through the coil 220, when compared to a case where the non-edge core 611 and the edge cores 612, 613, and the bridge cores 620a, 620b are separate cores.

Further, also in the present embodiment, similarly to the second embodiment, it is possible to suppress an increase in temperature of the upper core 1310 by using the cooling fins 630a to 630h, and the cooling small pipes 640a to 640h.

The above is similarly applied also to the lower inductor 1400.

As described above, also in the present embodiment, similarly to the second embodiment, it is possible to provide the induction heating device capable of simultaneously realizing both the suppression of the temperature of the core to a desired temperature or less and the generation of alternating magnetic field with desired magnitude.

Note that as is clear from the above explanation, the configuration of the present embodiment is one in which the edge core, the non-edge core, the bridge core, the partial edge core, and the partial non-edge core explained in the second embodiment are replaced with the region corresponding to the edge core, the region corresponding to the non-edge core, the region corresponding to the bridge core, the region corresponding to the partial edge core, and the region corresponding to the partial non-edge core, respectively. Therefore, by rereading the explanation of the second embodiment with such a replacement, the following preferable ranges are determined.

. Preferable range of sheet center-side lapped length L of regions corresponding to bridge cores 620a, 620b (L ≥ α or the like)
· Preferable range of sheet end-side lapped length L' of regions corresponding to bridge cores 620a, 620b (L' ≥ α or the like)
· Preferable range of height H of regions corresponding to bridge cores 620a, 620b (H ≥ Min (0.5 × h, 0.5 × α) or the like)
· Preferable range of ratio of length BL in y-axis direction of regions corresponding to bridge cores 620a, 620b to length CL in y-axis direction of regions corresponding to partial non-edge cores 611a to 611c and regions corresponding to partial edge cores 612a to 212c, 613a to 613c (BL / CL ≥ 0.2 or the like)

### <Modified example>

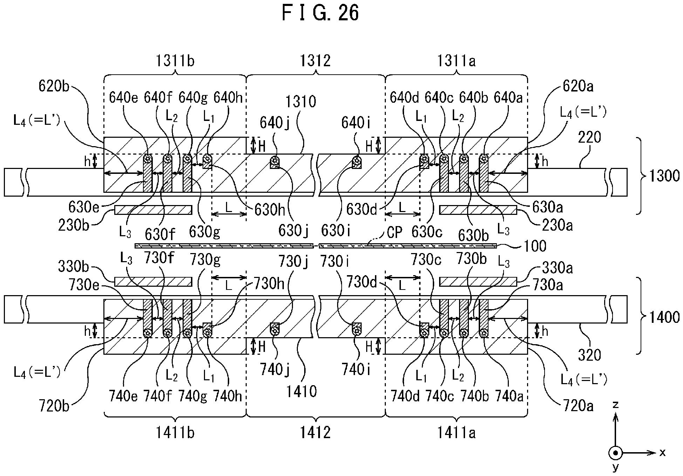

The present embodiment exemplified the case where the region 1312 of the upper core 1310 has the rectangular parallelepiped shape. However, the shape of the region 1312 of the upper core 1310 is unlimited to the rectangular parallelepiped shape. For example, as illustrated in Fig. 26, one or more recessed portions may be formed on an end surface on the planned conveyance plane CP side (lower surface) of the region 1312 of the upper core 1310 (note that Fig. 26 is a sectional view corresponding to Fig. 19). Fig. 26 exemplifies a case where two recessed portions are formed on the region 1312 of the upper core 1310 in a state of having an interval therebetween in the x-axis direction. Further, as illustrated in Fig. 26, cooling fins 630i to 630j similar to the cooling fins 630a to 630h, and cooling small pipes 640i to 640j similar to the cooling small pipes 640a to 640h may be arranged in the recessed portions. Fig. 26 exemplifies a case where the height (length in the z-axis direction) of the cooling fins 630i to 630j is lower than the height of the cooling fins 630a to 630d, 630e to 630h so that the cooling small pipes 640i to 640j do not reach an end surface on the back side (upper surface) of the region 1312. By designing as above, the cooling fins 630j to 630k and the cooling small pipes 640j to 640k are arranged in the region 1312 of the upper core 1310, and at the same time, the regions 1311a, 1311b, 1312 are integrated as one core.

Further, as illustrated in Fig. 26, also in the lower core 1410, cooling fins 730i to 730j similar to the cooling fins 730a to 730h, and cooling small pipes 740i to 740j similar to the cooling small pipes 740a to 740h may be arranged. Fig. 26 exemplifies a case where the height (length in the z-axis direction) of the cooling fins 730i to 730j is lower than the height of the cooling fins 730a to 730d, 730e to 730h, similarly to the cooling fins 630i to 630j.

Note that a y-z cross section at a position where the cooling fins 630i to 630j, 730i to 730j, and the cooling small pipes 640i to 640j, 740i to 740j are arranged corresponds to a cross section in which the lengths in the z-axis direction of the cooling fins 630d, 730d, the upper core 1310, and the lower core 1410 in Fig. 23 are changed to the lengths in the z-axis direction of the cooling fins 630i to 630j, 730i to 730j, the upper core 1310, and the lower core 1410, respectively, at the position where the cooling fins 630i to 630j, 730i to 730j, and the cooling small pipes 640i to 640j, 740i to 740j are arranged.

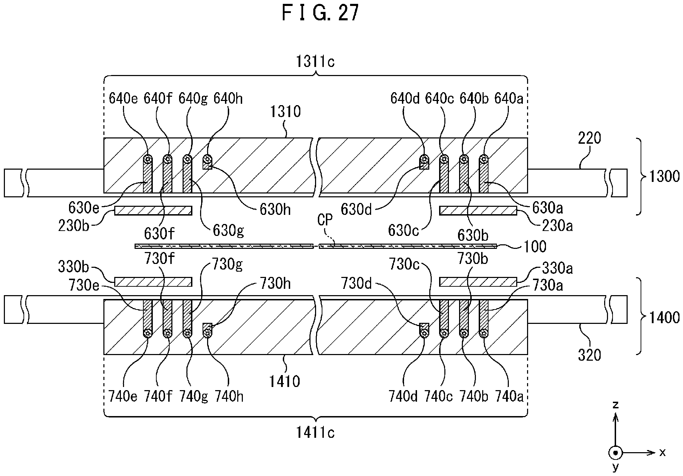

Further, the present embodiment exemplified the case where the height (length in the z-axis direction) of the region 1312 of the upper core 1310 is lower than the height of the other regions of the upper core 1310. However, it is not necessarily designed as above. For example, the height (length in the z-axis direction) of the region 1312 of the upper core 1310 may be the same regardless of the position in the x-axis direction. Fig. 27 exemplifies a case where the entire region 1311c in the x-axis direction of the upper core 1310 includes regions corresponding to bridge cores (note that Fig. 27 is a sectional view corresponding to Fig. 19).

The above modified example may also be applied to the lower inductor 1400.

Other than the above, the various modified examples explained in the first embodiment and the second embodiment may be applied to the induction heating device of the present embodiment. Further, a modified example combining at least two of the above-described respective modified examples including the modified examples explained in the first embodiment and the second embodiment, may be applied to the induction heating device of the present embodiment.

### (Fourth embodiment)

Next, a fourth embodiment of the present invention will be described. The second embodiment exemplified the case where the non-magnetic conductors configured to be able to perform cooling are arranged between the partial non-edge cores 611a and 611c, between the partial edge cores 612a and 612c, 613a and 613c, and between the partial edge cores 612c, 613c and the partial non-edge cores 611a, 611c, respectively. The present embodiment exemplifies a case where, in addition to the above, non-magnetic conductors configured to be able to perform cooling are arranged on end surfaces on the back side (upper surfaces) of the bridge cores 620a to 620b, and end surfaces on the back side (lower surfaces) of the bridge cores 720a to 720b. By designing as above, it is possible to further lower the temperatures of the bridge cores 620a to 620b, 720a to 720b. As described above, in the present embodiment, the configuration for lowering the temperatures of the bridge cores 620a to 620b, 720a to 720b is added to the induction heating device of the second embodiment. Therefore, in the explanation of the present embodiment, parts same as those of the first embodiment, the second embodiment, and the third embodiment are denoted by the same reference numerals as those given to Fig. 1 to Fig. 27, and a detailed explanation thereof will be omitted.

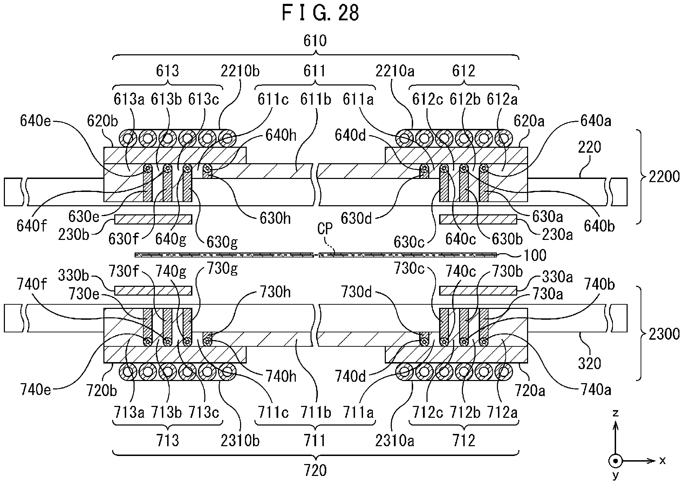

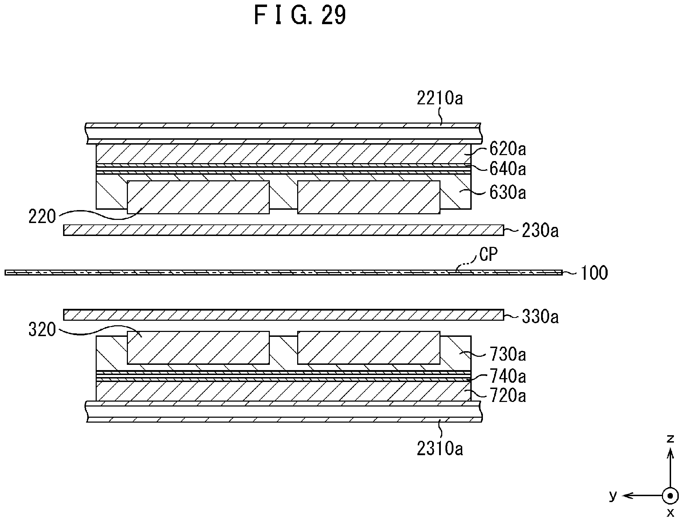

Fig. 28 is a view illustrating one example of a first cross section of an induction heating device, and is a view corresponding to Fig. 8. Fig. 29 is a view illustrating one example of a second cross section of the induction heating device, and is a view corresponding to Fig. 10. Also in the present embodiment, similarly to the second embodiment, a case is exemplified in which the induction heating device has a shape in a relation of mirror symmetry in which a y-z plane at a center in the x-axis direction of the induction heating device is set to a plane of symmetry.

In Fig. 28 and Fig. 29, a case is exemplified in which cooling pipes 2210a, 2210b are arranged on end surfaces on the back side (upper surfaces) of the bridge cores 620a, 620b of an upper inductor 2200. In like manner, Fig. 28 and Fig. 29 exemplify a case where cooling pipes 2310a, 2310b are arranged on end surfaces on the back side (lower surfaces) of the bridge cores 720a, 720b of a lower inductor 2300. Further, the present embodiment exemplifies a case where an external shape of the cooling pipes 2210a, 2210b, 2310a, 2310b is a zigzag shape.

The cooling pipes 2210a, 2210b are arranged in a zigzag shape on the end surfaces on the back side (upper surfaces) of the bridge cores 620a, 620b. Further, the cooling pipes 2210a, 2210b are in contact with the bridge cores 620a, 620b. The cooling pipes 2210a, 2210b are formed by non-magnetic conductors made of copper or the like, for example.

In like manner, the cooling pipes 2310a, 2310b are arranged in a zigzag shape on the end surfaces on the back side (lower surfaces) of the bridge cores 720a, 720b. The cooling pipes 2310a, 2310b are in contact with the bridge cores 720a, 720b. The cooling pipes 2310a, 2310b are also formed by non-magnetic conductors made of copper or the like, for example.

In the configuration of the second embodiment, it is possible to suppress the increase in temperatures of the bridge cores 620a, 620b by the cooling small pipes 640a to 640h and the air cooling, for example. However, with such a configuration, when a temperature of a periphery of the induction heating device is high, for example, it may not be able to lower the temperatures of the bridge cores 620a, 620b to a desired temperature. On the contrary, in the present embodiment, the cooling pipes 2210a, 2210b are arranged on the end surfaces on the back side (upper surfaces) of the bridge cores 620a, 620b. Therefore, the temperatures of the bridge cores 620a, 620b can be lowered more, when compared to the configuration of the second embodiment. As described above, the present embodiment exhibits the effect of enabling the temperatures of the bridge cores 620a, 620b to be surely lowered, in addition to the effects explained in the second embodiment.

The above is similarly applied also to the lower inductor 2300.

### <Modified example>

The present embodiment exemplified the case where the cooling pipes 2210a, 2210b are used as an example of the cooling members for cooling the bridge cores 620a, 620b. However, the cooling members for cooling the bridge cores 620a, 620b are unlimited to such cooling members. For example, the cooling members for cooling the bridge cores 620a, 620b may also be plate-shaped non-magnetic conductors. When it is designed as above, the plate-shaped non-magnetic conductors may be cooled through heat conduction.

Further, the present embodiment exemplified the case where the cooling pipes 2210a, 2210b are added to the induction heating device of the second embodiment. However, it is also possible that the cooling pipes 2210a, 2210b are added to the induction heating device of the third embodiment.

The above modified example may also be applied to the lower inductor 2300.

Further, the various modified examples explained in the first embodiment, the second embodiment, and the third embodiment may be applied to the induction heating device of the present embodiment. Further, a modified example combining at least two of the respective modified examples described above including the modified examples explained in the first embodiment, the second embodiment, and the third embodiment, may be applied to the induction heating device of the present embodiment.

Other than the above, as in the second embodiment and the fourth embodiment, when the upper core 610 and the bridge cores 620a to 620b are separate cores, and the lower core 710 and the bridge cores 720a to 720b are separate cores, the bridge cores 620a, 620b, 720a, 720b, may be moved along the x-axis direction in accordance with the movement in the x-axis direction of the shield plates 230a, 230b, 330a, 330b, respectively. The shield plates 230a, 230b, 330a, 330b are moved along the x-axis direction as explained in the second embodiment. For example, when, in a case where the band-shaped steel sheet 100 meanders, the shield plates 230a, 230b, 330a, 330b are moved along the x-axis direction (a direction in which the band-shaped steel sheet 100 meanders), the bridge cores 620a, 620b, 720a, 720b, and the shield plates 230a, 230b, 330a, 330b may be moved along the x-axis direction (a direction in which the band-shaped steel sheet 100 meanders), by an amount same as a meandering amount of the band-shaped steel sheet 100.

It should be noted that the above explained embodiments of the present invention merely illustrate concrete examples of implementing the present invention, and the technical scope of the present invention is not to be construed in a restrictive manner by these embodiments. That is, the present invention may be implemented in various forms without departing from the technical spirit or main features thereof.

### INDUSTRIAL APPLICABILITY

The present invention can be utilized for inductively heating a conductor sheet, for example.

## Claims

1. A transverse flux induction heating device, comprising:
a pair of coils having at least one coil arranged on a front side and at least one coil arranged on a rear side of a planned conveyance plane of a conductor sheet to make alternating magnetic fields generated through energization of alternating currents in mutually the same direction intersect the planned conveyance plane of the conductor sheet; and
cores arranged by a set for each coil forming the pair of coils, wherein:
the set of cores arranged for each coil has a non-edge core arranged at a position including a center in a width direction, and edge cores arranged on both sides of the non-edge core in the width direction;
the width direction is a direction perpendicular to a conveyance direction of the conductor sheet and a facing direction of the coils;
the non-edge core has a body portion and a center leg portion;
each of the edge cores arranged on both sides of the non-edge core in the width direction has a body portion, a center leg portion, an upstream-side leg portion, and a downstream-side leg portion;
the body portion is extended in the conveyance direction from a region on an upstream side in the conveyance direction of the coil to a region on a downstream side in the conveyance direction of the coil, on a back side of the coil;
the back side is an opposite side to a side where the planned conveyance plane exists;
the center leg portion is extended in a direction of the planned conveyance plane from the body portion to pass through a hollow portion of the coil;
the upstream-side leg portion is extended in a direction of the planned conveyance plane from the body portion, on the upstream side of the coil;
the downstream-side leg portion is extended in a direction of the planned conveyance plane from the body portion, on the downstream side of the coil; and
an interval between the upstream-side leg portion and the downstream-side leg portion provided to the edge core and the planned conveyance plane, is shorter than an interval between a part of the non-edge core except for the center leg portion thereof and the planned conveyance plane.

2. The transverse flux induction heating device according to claim 1, wherein
an interval between the center leg portion provided to the non-edge core and the planned conveyance plane, is shorter than the interval between the part of the non-edge core except for the center leg portion thereof and the planned conveyance plane.

3. The transverse flux induction heating device according to any one of claims 1 to 3, wherein
the non-edge core does not have the upstream-side leg portion and the downstream-side leg portion.

4. The transverse flux induction heating device according to any one of claims 1 to 3, wherein
the non-edge core has the upstream-side leg portion and the downstream-side leg portion.

5. The transverse flux induction heating device according to any one of claims 1 to 4, wherein
an interval between the center leg portion provided to the edge core and the planned conveyance plane, and the interval between the upstream-side leg portion and the downstream-side leg portion provided to the edge core and the planned conveyance plane, are the same.

6. The transverse flux induction heating device according to any one of claims 1 to 5, wherein
the interval between the center leg portion provided to the edge core and the planned conveyance plane, and the interval between the center leg portion provided to the non-edge core and the planned conveyance plane, are the same.

7. The transverse flux induction heating device according to any one of claims 1 to 6, wherein
in the set of cores, the non-edge core and two edge cores arranged on both sides of the non-edge core are an integrated core.
